(19)

Europäisches
Patentamt
European
Patent Office
Office européen
des brevets

(11) **EP 4 738 750 A1**

(12) **EUROPEAN PATENT APPLICATION**
published in accordance with Art. 153(4) EPC

(43) Date of publication:
**06.05.2026 Bulletin 2026/19**

(21) Application number: **24853549.4**

(22) Date of filing: **29.07.2024**

(51) International Patent Classification (IPC):
**H04L 5/00** (2006.01)

(52) Cooperative Patent Classification (CPC):
**G01S 13/88; H04L 5/00; H04W 72/0453**

(86) International application number:
**PCT/CN2024/108251**

(87) International publication number:
**WO 2025/036137 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023 CN 202311016823**

(71) Applicant: **Huawei Technologies Co., Ltd.
Shenzhen, Guangdong 518129 (CN)**

(72) Inventors:
• **WANG, Zhonglong
Shenzhen, Guangdong 518129 (CN)**

• **XIE, Xinqian
Shenzhen, Guangdong 518129 (CN)**
• **SHAO, Jiafeng
Shenzhen, Guangdong 518129 (CN)**
• **YE, Wei
Shenzhen, Guangdong 518129 (CN)**
• **LI, Hantao
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57) Embodiments of this application disclose a communication method and apparatus. The method includes: A first network device generates a first signal based on a first sequence, where the first sequence is a product of a second sequence and a third sequence, the second sequence carries data, the $i^{th}$ element in the second sequence corresponds to the $i^{th}$ subcarrier in N subcarriers in a first frequency domain resource, the $i^{th}$ element in the third sequence corresponds to the $i^{th}$ subcarrier in the first frequency domain resource, the $i^{th}$ element in the first sequence is carried on the $i^{th}$ subcarrier in the first frequency domain resource, the first frequency domain resource includes M non-overlapping frequency domain subresources, the third sequence includes M subsequences, the $t^{th}$ subsequence in the M subsequences corresponds to the $t^{th}$ frequency domain subresource in the M frequency domain subresources, and the $t^{th}$ subsequence in the M subsequences satisfies the $t^{th}$ relationship in the M relationships. The first network device sends the first signal. According to embodiments of this application, ranging precision of the integrated sensing and communication signal is improved.

FIG. 2

**EP 4 738 750 A1**

**Description**

This application claims priority to Chinese Patent Application No. 202311016823.9, filed with the China National Intellectual Property Administration on August 11, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

Integrated sensing and communication is a key technology for a next-generation wireless communication network, aims to integrate two functions of wireless communication and sensing into a same system, and implements sensing functions such as positioning, detection, imaging, and identification of a target by using various propagation characteristics of radio signals, to obtain physical ambient environment information, explore a communication capability, and improve user experience. For example, a network device performs sensing by sending a sensing signal and receiving an echo signal, to obtain information such as location and speed of a target in an environment. The echo signal is a signal generated when the sensing signal is reflected by the target in the environment. A delay of the echo signal relative to the sent sensing signal shows a range from the target, and a Doppler frequency shift of the echo signal relative to the sent sensing signal shows a speed of the target.

When the network device needs to communicate with a terminal device and sense a target in the environment, the network device needs to send an integrated sensing and communication signal for communication and sensing. How to design an integrated sensing and communication signal used for both communication and sensing is an urgent problem to be resolved.

SUMMARY

Embodiments of this application provide a communication method and apparatus, so that not only a root-mean-square bandwidth of an integrated sensing and communication signal can be increased, to improve ranging precision of the integrated sensing and communication signal, but also a lower peak-to-sidelobe ratio of a range spectrum is obtained by sensing by using the integrated sensing and communication signal, to reduce a false alarm probability of sensing.

According to a first aspect, an embodiment of this application provides a communication method. The method is applied to a first network device, or a chip or a circuit configured in the first network device, and includes:

  generating a first signal based on a first sequence, where the first sequence is a product of a second sequence and a third sequence, where
  the first sequence includes N first elements, the second sequence includes N second elements, the second sequence carries data, and the third sequence includes N third elements greater than or equal to 0;
  the $i^{th}$ element in the second sequence corresponds to the $i^{th}$ subcarrier in N subcarriers in a first frequency domain resource, the $i^{th}$ element in the third sequence corresponds to the $i^{th}$ subcarrier in the first frequency domain resource, the $i^{th}$ element in the first sequence is carried on the $i^{th}$ subcarrier in the first frequency domain resource, N is an integer greater than 1, and i is an integer greater than or equal to 1 and less than or equal to N; and
  the first frequency domain resource includes M non-overlapping frequency domain subresources, the third sequence includes M subsequences, the $t^{th}$ subsequence in the M subsequences corresponds to the $t^{th}$ frequency domain subresource in the M frequency domain subresources, the $t^{th}$ subsequence in the M subsequences satisfies the $t^{th}$ relationship in M relationships, M is an integer greater than or equal to 2 and less than or equal to N, and t is an integer greater than or equal to 1 and less than or equal to M; and
  sending the first signal.

The first signal is an integrated sensing and communication signal. The second sequence that carries data is multiplied by the third sequence in a segmented form, to generate the integrated sensing and communication signal. The generated integrated sensing and communication signal may have different properties by designing the third sequence in different forms, to satisfy different sensing and communication requirements. For example, when the third sequence is a sequence in a concave form, a root-mean-square bandwidth of the integrated sensing and communication signal may be increased, to improve ranging precision of the integrated sensing and communication signal. When the third sequence includes a subsequence in a convex form, a lower peak-to-sidelobe ratio of a range spectrum is obtained by sensing by

2

using the integrated sensing and communication signal, to reduce a false alarm probability of sensing.

In a possible design, the $i^{th}$ element in the third sequence is equal to the $(N-i+1)^{th}$ element in the third sequence. That is, the third sequence may be a symmetric sequence.

In another possible design, values of elements in at least one of the M subsequences are all the same, so that the values of the elements in the at least one subsequence in the third sequence are constant.

In another possible design, M is equal to 3, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;

the $2^{nd}$ subsequence in the M subsequences satisfies the $2^{nd}$ relationship in the M relationships, and the $2^{nd}$ relationship is:

values of elements in the $2^{nd}$ subsequence are all second values, a value of an element in the $2^{nd}$ subsequence satisfies a polynomial function of a square of $(k-(N-1)/2)$, or a value of an element in the $2^{nd}$ subsequence satisfies a functional relationship $\sqrt{\dfrac{1}{\mu(k-\dfrac{N-1}{2})^2+v}+s}$, where $\left|\dfrac{12v}{\mu(N-1)N(N+1)}\right|>0.5$, k is a sequence number, in the third sequence, of an element in the $2^{nd}$ subsequence, $\mu$ is less than 0, v is greater than 0, and s is greater than 0;

the $3^{rd}$ subsequence in the M subsequences satisfies the $3^{rd}$ relationship in the M relationships, and the $3^{rd}$ relationship is: values of elements in the $3^{rd}$ subsequence are all third values; and

the first value and the third value are both greater than the second value.

In this design, the third sequence is a sequence in a concave form, and the integrated sensing and communication signal is generated by using the third sequence, so that a root-mean-square bandwidth of the integrated sensing and communication signal can be increased, to improve ranging precision of the integrated sensing and communication signal.

In another possible design, a value obtained by dividing a quantity of subcarriers included in the $1^{st}$ frequency domain subresource by a quantity N of all subcarriers included in the first frequency domain resource is less than 0.25; a value obtained by dividing a quantity of subcarriers included in the $3^{rd}$ frequency domain subresource by the quantity N of all subcarriers included in the first frequency domain resource is less than 0.25; or a value obtained by dividing a sum of quantities of subcarriers included in the $1^{st}$ frequency domain subresource and the $3^{rd}$ frequency domain subresource by the quantity N of all subcarriers included in the first frequency domain resource is less than 0.5.

In another possible design, the first value is equal to the third value.

In another possible design, the quantity of subcarriers included in the $1^{st}$ frequency domain subresource is equal to the quantity of subcarriers included in the $3^{rd}$ frequency domain subresource.

In another possible design, M is equal to 5, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;

the $2^{nd}$ subsequence in the M subsequences satisfies the $2^{nd}$ relationship in the M relationships, and the $2^{nd}$ relationship is: values of elements in the $2^{nd}$ subsequence are all 1s;

the $3^{rd}$ subsequence in the M subsequences satisfies the $3^{rd}$ relationship in the M relationships, and the $3^{rd}$ relationship is:

values of elements in the $3^{rd}$ subsequence are all second values, a value of an element in the $3^{rd}$ subsequence satisfies a polynomial function of a square of $(k-(N-1)/2)$, or a value of an element in the $3^{rd}$ subsequence satisfies a functional relationship $\sqrt{\dfrac{1}{\mu(k-\dfrac{N-1}{2})^2+v}+s}$, where $\left|\dfrac{12v}{\mu(N-1)N(N+1)}\right|>0.5$, k is a sequence number, in the third sequence, of an element in the 3$^{rd}$ subsequence, $\mu$ is less than 0, v is greater than 0, and s is greater than 0;

the 4$^{th}$ subsequence in the M subsequences satisfies the 4$^{th}$ relationship in the M relationships, and the 4$^{th}$ relationship is: values of elements in the 4$^{th}$ subsequence are all 1s;

the 5$^{th}$ subsequence in the M subsequences satisfies the 5$^{th}$ relationship in the M relationships, and the 5$^{th}$ relationship is: values of elements in the 5$^{th}$ subsequence are all third values; and

the first value and the third value are both greater than 1, and the second value is greater than 0 and less than or equal to 1.

In this design, the third sequence is a sequence in a concave form, and the integrated sensing and communication signal is generated by using the third sequence, so that a root-mean-square bandwidth of the integrated sensing and communication signal can be increased, to improve ranging precision of the integrated sensing and communication signal.

In another possible design, a quantity of subcarriers included in the 1$^{st}$ frequency domain subresource is equal to a quantity of subcarriers included in the 5$^{th}$ frequency domain subresource, and/or a quantity of subcarriers included in the 2$^{nd}$ frequency domain subresource is equal to a quantity of subcarriers included in the 4$^{th}$ frequency domain subresource.

In another possible design, the first value is equal to the third value.

In another possible design, the k$^{th}$ element in the third sequence is less than or equal to a larger value in the k1$^{th}$ element in the third sequence and the k2$^{th}$ element in the third sequence, where k, k1, and k2 are all integers greater than or equal to 1 and less than or equal to N, k2 is greater than k1, and k is greater than or equal to k1 and less than or equal to k2. In this design, the third sequence is a sequence in a concave form, and the integrated sensing and communication signal is generated by using the third sequence, so that a root-mean-square bandwidth of the integrated sensing and communication signal can be increased, to improve ranging precision of the integrated sensing and communication signal.

In another possible design, the 1$^{st}$ subsequence in the M subsequences satisfies the 1$^{st}$ relationship in the M relationships, and the 1$^{st}$ relationship is: the k1$^{th}$ element in the 1$^{st}$ subsequence is greater than or equal to the k2$^{th}$ element in the 1$^{st}$ subsequence. The 2$^{nd}$ subsequence in the M subsequences satisfies the 2$^{nd}$ relationship in the M relationships, and the 2$^{nd}$ relationship is: the k$^{th}$ element in the 2$^{nd}$ subsequence is greater than or equal to a smaller value in the k1$^{th}$ element in the 2$^{nd}$ subsequence and the k2$^{th}$ element in the 2$^{nd}$ subsequence. The 3$^{rd}$ subsequence in the M subsequences satisfies the 3$^{rd}$ relationship in the M relationships, and the 3$^{rd}$ relationship is: the k1$^{th}$ element in the 3$^{rd}$ subsequence is less than or equal to the k2$^{th}$ elements in the 3$^{rd}$ subsequence, where k, k1, and k2 are all integers greater than or equal to 1 and less than or equal to N, k2 is greater than k1, and k is greater than or equal to k1 and less than or equal to k2. It can be learned that the 1$^{st}$ subsequence is a monotonically decreasing sequence, the 2$^{nd}$ subsequence is a sequence in a convex form, and the 3$^{rd}$ subsequence is a monotonically increasing sequence.

In this design, the third sequence includes a subsequence in a convex form, and the integrated sensing and communication signal is generated by using the third sequence. A lower peak-to-sidelobe ratio of a range spectrum is obtained by sensing by using the integrated sensing and communication signal, to reduce a false alarm probability of sensing.

In another possible design, a sum of squares of all elements in the third sequence is equal to N.

In another possible design, the first signal is used for sensing, the first signal is used for sensing and channel measurement, the first signal is used for sensing and channel estimation, or the first signal is used for sensing and data transmission. Sensing and communication are implemented by using the first signal.

In another possible design, an echo signal of the first signal is received. The first network device sends the first signal, receives the echo signal of the first signal, and senses information such as location and speed of a target based on the echo signal. The echo signal is generated by reflecting the first signal by a target in an environment.

In another possible design, first information is sent to a second network device and/or a terminal device. The first information indicates parameter information of the third sequence, and the parameter information includes a plurality of sets of parameters used to determine the third sequence. The parameters may be used to determine a plurality of relationships. The first information is sent, so that the second network device and/or the terminal device can determine the third sequence. The terminal device may obtain, based on the third sequence, communication data or a communication reference signal sequence carried in the second sequence, to implement communication between the first network device and the terminal device. In addition, when the first network device and the second network device know the second sequence, different third sequences may be multiplied by the second sequence to obtain first sequences, and different first signals are generated by using the different first sequences for sensing, to adapt to different sensing performance requirements. In addition, the first network device and a first terminal device can communicate with each other.

According to a second aspect, an embodiment of this application provides a communication method. The method is applied to a second network device, or a chip or a circuit configured in the second network device, and includes:

receiving an echo signal of a first signal, where the first signal is generated based on a first sequence, and the first sequence is a product of a second sequence and a third sequence, where

the first sequence includes N first elements, the second sequence includes N second elements, the second sequence carries data, and the third sequence includes N third elements greater than or equal to 0;

the $i^{th}$ element in the second sequence corresponds to the $i^{th}$ subcarrier in N subcarriers in a first frequency domain resource, the $i^{th}$ element in the third sequence corresponds to the $i^{th}$ subcarrier in the first frequency domain resource, the $i^{th}$ element in the first sequence is carried on the $i^{th}$ subcarrier in the first frequency domain resource, N is an integer greater than 1, and i is an integer greater than or equal to 1 and less than or equal to N; and

the first frequency domain resource includes M non-overlapping frequency domain subresources, the third sequence includes M subsequences, the $t^{th}$ subsequence in the M subsequences corresponds to the $t^{th}$ frequency domain subresource in the M frequency domain subresources, the $t^{th}$ subsequence in the M subsequences satisfies the $t^{th}$ relationship in M relationships, M is an integer greater than or equal to 2 and less than or equal to N, and t is an integer greater than or equal to 1 and less than or equal to M.

The first signal is an integrated sensing and communication signal. The second sequence that carries data is multiplied by the third sequence in a segmented form, to generate the integrated sensing and communication signal. The generated integrated sensing and communication signal may have different properties by using the third sequence in different forms, to satisfy different sensing and communication requirements. For example, when the third sequence is a sequence in a concave form, a root-mean-square bandwidth of the integrated sensing and communication signal may be increased, to improve ranging precision of the integrated sensing and communication signal. When the third sequence includes a subsequence in a convex form, a lower peak-to-sidelobe ratio of a range spectrum is obtained by sensing by using the integrated sensing and communication signal, to reduce a false alarm probability of sensing.

In a possible design, the $i^{th}$ element in the third sequence is equal to the $(N-i+1)^{th}$ element in the third sequence. That is, the third sequence is a symmetric sequence.

In another possible design, values of elements in at least one of the M subsequences are all the same, so that the values of the elements in the at least one subsequence in the third sequence are constant.

In another possible design, M is equal to 3, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;

the $2^{nd}$ subsequence in the M subsequences satisfies the $2^{nd}$ relationship in the M relationships, and the $2^{nd}$ relationship is:

values of elements in the $2^{nd}$ subsequence are all second values, a value of an element in the $2^{nd}$ subsequence satisfies a polynomial function of a square of $(k-(N-1)/2)$, or a value of an element in the $2^{nd}$ subsequence satisfies a functional relationship $\sqrt{\dfrac{1}{\mu(k-\dfrac{N-1}{2})^2+v}+s}$ , where $\left|\dfrac{12v}{\mu(N-1)N(N+1)}\right|>0.5$ , k is a sequence number, in the third sequence, of an element in the $2^{nd}$ subsequence, $\mu$ is less than 0, v is greater than 0, and s is greater than 0;

the $3^{rd}$ subsequence in the M subsequences satisfies the $3^{rd}$ relationship in the M relationships, and the $3^{rd}$ relationship is: values of elements in the $3^{rd}$ subsequence are all third values; and

the first value and the third value are both greater than the second value.

In this design, the third sequence is a sequence in a concave form, and the integrated sensing and communication signal is generated by using the third sequence, so that a root-mean-square bandwidth of the integrated sensing and communication signal can be increased, to improve ranging precision of the integrated sensing and communication signal.

In another possible design, a value obtained by dividing a quantity of subcarriers included in the $1^{st}$ frequency domain subresource by a quantity N of all subcarriers included in the first frequency domain resource is less than 0.25; a value obtained by dividing a quantity of subcarriers included in the $3^{rd}$ frequency domain subresource by the quantity N of all subcarriers included in the first frequency domain resource is less than 0.25; or a value obtained by dividing a sum of quantities of subcarriers included in the $1^{st}$ frequency domain subresource and the $3^{rd}$ frequency domain subresource by the quantity N of all subcarriers included in the first frequency domain resource is less than 0.5.

In another possible design, the first value is equal to the third value.

In another possible design, the quantity of subcarriers included in the 1st frequency domain subresource is equal to the quantity of subcarriers included in the 3rd frequency domain subresource.

In another possible design, M is equal to 5, a start frequency of the t1th frequency domain subresource in the M frequency domain subresources is less than a start frequency of the t2th frequency domain subresource in the M frequency domain subresources, t1 is an integer greater than or equal to 1 and less than M, t2 is an integer greater than 1 and less than or equal to M, and t1 is less than t2;

the 1st subsequence in the M subsequences satisfies the 1st relationship in the M relationships, and the 1st relationship is: values of elements in the 1st subsequence are all first values; the 2nd subsequence in the M subsequences satisfies the 2nd relationship in the M relationships, and the 2nd relationship is: values of elements in the 2nd subsequence are all 1s;

the 3rd subsequence in the M subsequences satisfies the 3rd relationship in the M relationships, and the 3rd relationship is:

values of elements in the 3rd subsequence are all second values, a value of an element in the 3rd subsequence satisfies a polynomial function of a square of $(k-(N-1)/2)$, or a value of an element in the 3rd subsequence satisfies

a functional relationship $\sqrt{\dfrac{1}{\mu(k-\dfrac{N-1}{2})^2+v}+s}$ , where $\left|\dfrac{12v}{\mu(N-1)N(N+1)}\right|>0.5$ , k is a sequence number, in the third sequence, of an element in the 3rd subsequence, $\mu$ is less than 0, v is greater than 0, and s is greater than 0;

the 4th subsequence in the M subsequences satisfies the 4th relationship in the M relationships, and the 4th relationship is: values of elements in the 4th subsequence are all 1s;

the 5th subsequence in the M subsequences satisfies the 5th relationship in the M relationships, and the 5th relationship is: values of elements in the 5th subsequence are all third values; and

the first value and the third value are both greater than 1, and the second value is greater than 0 and less than or equal to 1.

In this design, the third sequence is a sequence in a concave form, and the integrated sensing and communication signal is generated by using the third sequence, so that a root-mean-square bandwidth of the integrated sensing and communication signal can be increased, to improve ranging precision of the integrated sensing and communication signal.

In another possible design, a quantity of subcarriers included in the 1st frequency domain subresource is equal to a quantity of subcarriers included in the 5th frequency domain subresource, and/or a quantity of subcarriers included in the 2nd frequency domain subresource is equal to a quantity of subcarriers included in the 4th frequency domain subresource.

In another possible design, the first value is equal to the third value.

In another possible design, the kth element in the third sequence is less than or equal to a larger value in the k1th element in the third sequence and the k2th element in the third sequence, where k, k1, and k2 are all integers greater than or equal to 1 and less than or equal to N, k2 is greater than k1, and k is greater than or equal to k1 and less than or equal to k2. In this design, the third sequence is a sequence in a concave form, and the integrated sensing and communication signal is generated by using the third sequence, so that a root-mean-square bandwidth of the integrated sensing and communication signal can be increased, to improve ranging precision of the integrated sensing and communication signal.

In another possible design, the 1st subsequence in the M subsequences satisfies the 1st relationship in the M relationships, and the 1st relationship is: the k1th element in the 1st subsequence is greater than or equal to the k2th element in the 1st subsequence. The 2nd subsequence in the M subsequences satisfies the 2nd relationship in the M relationships, and the 2nd relationship is: the kth element in the 2nd subsequence is greater than or equal to a smaller value in the k1th element in the 2nd subsequence and the k2th element in the 2nd subsequence. The 3rd subsequence in the M subsequences satisfies the 3rd relationship in the M relationships, and the 3rd relationship is: the k1th element in the 3rd subsequence is less than or equal to the k2th elements in the 3rd subsequence, where k, k1, and k2 are all integers greater than or equal to 1 and less than or equal to N, k2 is greater than k1, and k is greater than or equal to k1 and less than or equal to k2. It can be learned that the 1st subsequence is a monotonically decreasing sequence, the 2nd subsequence is a sequence in a convex form, and the 3rd subsequence is a monotonically increasing sequence.

In this design, the third sequence includes a subsequence in a convex form, and the integrated sensing and communication signal is generated by using the third sequence. A lower peak-to-sidelobe ratio of a range spectrum is obtained by sensing by using the integrated sensing and communication signal, to reduce a false alarm probability of sensing.

In another possible design, a sum of squares of all elements in the third sequence is equal to N.

In another possible design, first information sent by a first network device is received. The first information indicates parameter information of the third sequence, and the parameter information includes a plurality of sets of parameters used to determine the third sequence. The parameters may be used to determine a plurality of relationships. The second network device determines the third sequence based on the first information, and processes the first signal based on the third sequence, to obtain the second sequence. The third sequence is multiplied by the second sequence to obtain different first sequences, and the first signals are generated by using the different first sequences for sensing, to adapt to different sensing performance requirements.

In another possible design, the first signal is used for sensing, the first signal is used for sensing and channel measurement, the first signal is used for sensing and channel estimation, or the first signal is used for sensing and data transmission. Sensing and communication are implemented by using the first signal.

According to a third aspect, an embodiment of this application provides a communication method. The method is applied to a first terminal device, or a chip or a circuit configured in the first terminal device, and includes:

receiving a first signal, where the first signal is generated based on a first sequence, and the first sequence is a product of a second sequence and a third sequence, where

the first sequence includes N first elements, the second sequence includes N second elements, the second sequence carries data, and the third sequence includes N third elements greater than or equal to 0;

the $i^{th}$ element in the second sequence corresponds to the $i^{th}$ subcarrier in N subcarriers in a first frequency domain resource, the $i^{th}$ element in the third sequence corresponds to the $i^{th}$ subcarrier in the first frequency domain resource, the $i^{th}$ element in the first sequence is carried on the $i^{th}$ subcarrier in the first frequency domain resource, N is an integer greater than 1, and i is an integer greater than or equal to 1 and less than or equal to N; and

the first frequency domain resource includes M non-overlapping frequency domain subresources, the third sequence includes M subsequences, the $t^{th}$ subsequence in the M subsequences corresponds to the $t^{th}$ frequency domain subresource in the M frequency domain subresources, the $t^{th}$ subsequence in the M subsequences satisfies the $t^{th}$ relationship in M relationships, M is an integer greater than or equal to 2 and less than or equal to N, and t is an integer greater than or equal to 1 and less than or equal to M.

The first signal is an integrated sensing and communication signal. The second sequence that carries data is multiplied by the third sequence in a segmented form, to generate the integrated sensing and communication signal. The generated integrated sensing and communication signal may have different properties by designing the third sequence in different forms, to satisfy different sensing and communication requirements. For example, when the third sequence is a sequence in a concave form, a root-mean-square bandwidth of the integrated sensing and communication signal may be increased, to improve ranging precision of the integrated sensing and communication signal. When the third sequence includes a subsequence in a convex form, a lower peak-to-sidelobe ratio of a range spectrum is obtained by sensing by using the integrated sensing and communication signal, to reduce a false alarm probability of sensing.

In a possible design, the $i^{th}$ element in the third sequence is equal to the $(N-i+1)^{th}$ element in the third sequence. That is, the third sequence is a symmetric sequence.

In another possible design, values of elements in at least one of the M subsequences are all the same, so that the values of the elements in the at least one subsequence in the third sequence are constant.

In another possible design, M is equal to 3, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;

the $2^{nd}$ subsequence in the M subsequences satisfies the $2^{nd}$ relationship in the M relationships, and the $2^{nd}$ relationship is:

values of elements in the $2^{nd}$ subsequence are all second values, a value of an element in the $2^{nd}$ subsequence satisfies a polynomial function of a square of $(k-(N-1)/2)$, or a value of an element in the $2^{nd}$ subsequence satisfies a functional relationship $\sqrt{\dfrac{1}{\mu(k-\dfrac{N-1}{2})^2+v}+s}$ , where $\left|\dfrac{12v}{\mu(N-1)N(N+1)}\right|>0.5$ , k is a sequence number, in the third sequence, of an element in the $2^{nd}$ subsequence, $\mu$ is less than 0, v is greater than 0, and s is greater than 0;

the 3rd subsequence in the M subsequences satisfies the 3rd relationship in the M relationships, and the 3rd relationship is: values of elements in the 3rd subsequence are all third values; and

the first value and the third value are both greater than the second value.

In this design, the third sequence is a sequence in a concave form, and the integrated sensing and communication signal is generated by using the third sequence, so that a root-mean-square bandwidth of the integrated sensing and communication signal can be increased, to improve ranging precision of the integrated sensing and communication signal.

In another possible design, a value obtained by dividing a quantity of subcarriers included in the 1st frequency domain subresource by a quantity N of all subcarriers included in the first frequency domain resource is less than 0.25; a value obtained by dividing a quantity of subcarriers included in the 3rd frequency domain subresource by the quantity N of all subcarriers included in the first frequency domain resource is less than 0.25; or a value obtained by dividing a sum of quantities of subcarriers included in the 1st frequency domain subresource and the 3rd frequency domain subresource by the quantity N of all subcarriers included in the first frequency domain resource is less than 0.5.

In another possible design, the first value is equal to the third value.

In another possible design, the quantity of subcarriers included in the 1st frequency domain subresource is equal to the quantity of subcarriers included in the 3rd frequency domain subresource.

In another possible design, M is equal to 5, a start frequency of the t1th frequency domain subresource in the M frequency domain subresources is less than a start frequency of the t2th frequency domain subresource in the M frequency domain subresources, t1 is an integer greater than or equal to 1 and less than M, t2 is an integer greater than 1 and less than or equal to M, and t1 is less than t2;

the 1st subsequence in the M subsequences satisfies the 1st relationship in the M relationships, and the 1st relationship is: values of elements in the 1st subsequence are all first values;

the 2nd subsequence in the M subsequences satisfies the 2nd relationship in the M relationships, and the 2nd relationship is: values of elements in the 2nd subsequence are all 1s;

the 3rd subsequence in the M subsequences satisfies the 3rd relationship in the M relationships, and the 3rd relationship is:

values of elements in the 3rd subsequence are all second values, a value of an element in the 3rd subsequence satisfies a polynomial function of a square of $(k-(N-1)/2)$, or a value of an element in the 3rd subsequence satisfies

a functional relationship $\sqrt{\dfrac{1}{\mu(k-\dfrac{N-1}{2})^2+v}+s}$, where $\left|\dfrac{12v}{\mu(N-1)N(N+1)}\right|>0.5$, k is a sequence number, in the third sequence, of an element in the 3rd subsequence, $\mu$ is less than 0, v is greater than 0, and s is greater than 0;

the 4th subsequence in the M subsequences satisfies the 4th relationship in the M relationships, and the 4th relationship is: values of elements in the 4th subsequence are all 1s;

the 5th subsequence in the M subsequences satisfies the 5th relationship in the M relationships, and the 5th relationship is: values of elements in the 5th subsequence are all third values; and

the first value and the third value are both greater than 1, and the second value is greater than 0 and less than or equal to 1.

In this design, when the third sequence is a sequence in a concave form, the integrated sensing and communication signal is generated by using the third sequence, so that a root-mean-square bandwidth of the integrated sensing and communication signal can be increased, to improve ranging precision of the integrated sensing and communication signal.

In another possible design, a quantity of subcarriers included in the 1st frequency domain subresource is equal to a quantity of subcarriers included in the 5th frequency domain subresource, and/or a quantity of subcarriers included in the 2nd frequency domain subresource is equal to a quantity of subcarriers included in the 4th frequency domain subresource.

In another possible design, the first value is equal to the third value.

In another possible design, the kth element in the third sequence is less than or equal to a larger value in the k1th element in the third sequence and the k2th element in the third sequence, where k, k1, and k2 are all integers greater than or equal to 1 and less than or equal to N, k2 is greater than k1, and k is greater than or equal to k1 and less than or equal to k2. In this design, the third sequence is a sequence in a concave form, and the integrated sensing and communication signal is generated by using the third sequence, so that a root-mean-square bandwidth of the integrated sensing and communication signal can be increased, to improve ranging precision of the integrated sensing and communication signal.

In another possible design, the 1st subsequence in the M subsequences satisfies the 1st relationship in the M relationships, and the 1st relationship is: the k1th element in the 1st subsequence is greater than or equal to the k2th element in the 1st subsequence. The 2nd subsequence in the M subsequences satisfies the 2nd relationship in the M relationships, and the 2nd relationship is: the kth element in the 2nd subsequence is greater than or equal to a smaller value in the k1th element in the 2nd subsequence and the k2th element in the 2nd subsequence. The 3rd subsequence in the M subsequences satisfies the 3rd relationship in the M relationships, and the 3rd relationship is: the k1th element in the 3rd subsequence is less than or equal to the k2th elements in the 3rd subsequence, where k, k1, and k2 are all integers greater than or equal to 1 and less than or equal to N, k2 is greater than k1, and k is greater than or equal to k1 and less than or equal to k2. It can be learned that the 1st subsequence is a monotonically decreasing sequence, the 2nd subsequence is a sequence in a convex form, and the 3rd subsequence is a monotonically increasing sequence.

In this design, the third sequence includes a subsequence in a convex form, and the integrated sensing and communication signal is generated by using the third sequence. A lower peak-to-sidelobe ratio of a range spectrum is obtained by sensing by using the integrated sensing and communication signal, to reduce a false alarm probability of sensing.

In another possible design, a sum of squares of all elements in the third sequence is equal to N.

In another possible design, the first terminal device receives first information sent by a first network device. The first information indicates parameter information of the third sequence, and the parameter information includes a plurality of sets of parameters used to determine the third sequence. The parameters may be used to determine a plurality of relationships. The second sequence is obtained from the first signal based on the first information. The third sequence is determined by using the parameter information of the third sequence, and then the first signal is demodulated to obtain the second sequence, to obtain communication data or a communication reference sequence carried in the second sequence, so as to implement communication between the first network device and the first terminal device.

In another possible design, the first signal is used for sensing, the first signal is used for sensing and channel measurement, the first signal is used for sensing and channel estimation, or the first signal is used for sensing and data transmission. Sensing and communication are implemented by using the first signal.

According to a fourth aspect, an embodiment of this application provides a communication method. The method is applied to a second terminal device, or a chip or a circuit configured in the second terminal device, and includes:

receiving an echo signal of a first signal, where the first signal is generated based on a first sequence, and the first sequence is a product of a second sequence and a third sequence, where
the first sequence includes N first elements, the second sequence includes N second elements, the second sequence carries data, and the third sequence includes N third elements greater than or equal to 0;
the ith element in the second sequence corresponds to the ith subcarrier in N subcarriers in a first frequency domain resource, the ith element in the third sequence corresponds to the ith subcarrier in the first frequency domain resource, the ith element in the first sequence is carried on the ith subcarrier in the first frequency domain resource, N is an integer greater than 1, and i is an integer greater than or equal to 1 and less than or equal to N; and
the first frequency domain resource includes M non-overlapping frequency domain subresources, the third sequence includes M subsequences, the tth subsequence in the M subsequences corresponds to the tth frequency domain subresource in the M frequency domain subresources, the tth subsequence in the M subsequences satisfies the tth relationship in M relationships, M is an integer greater than or equal to 2 and less than or equal to N, and t is an integer greater than or equal to 1 and less than or equal to M.

The first signal is an integrated sensing and communication signal. The second sequence that carries data is multiplied by the third sequence in a segmented form, to generate the integrated sensing and communication signal. The generated integrated sensing and communication signal may have different properties by designing the third sequence in different forms, to satisfy different sensing and communication requirements. For example, when the third sequence is a sequence in a concave form, a root-mean-square bandwidth of the integrated sensing and communication signal may be increased, to improve ranging precision of the integrated sensing and communication signal. When the third sequence includes a subsequence in a convex form, a lower peak-to-sidelobe ratio of a range spectrum is obtained by sensing by using the integrated sensing and communication signal, to reduce a false alarm probability of sensing.

In a possible design, the ith element in the third sequence is equal to the (N-i+1)th element in the third sequence. That is, the third sequence may be a symmetric sequence.

In another possible design, values of elements in at least one of the M subsequences are all the same, so that the values of the elements in the at least one subsequence in the third sequence are constant.

In another possible design, M is equal to 3, a start frequency of the t1th frequency domain subresource in the M frequency domain subresources is less than a start frequency of the t2th frequency domain subresource in the M frequency domain subresources, t1 is an integer greater than or equal to 1 and less than M, t2 is an integer greater than 1 and less than or equal to M, and t1 is less than t2;

the 1st subsequence in the M subsequences satisfies the 1st relationship in the M relationships, and the 1st relationship is: values of elements in the 1st subsequence are all first values;
the 2nd subsequence in the M subsequences satisfies the 2nd relationship in the M relationships, and the 2nd relationship is:

values of elements in the 2nd subsequence are all second values, a value of an element in the 2nd subsequence satisfies a polynomial function of a square of $(k-(N-1)/2)$, or a value of an element in the 2nd subsequence satisfies

a functional relationship $\sqrt{\dfrac{1}{\mu(k-\dfrac{N-1}{2})^2 + v} + s}$ , where $\left|\dfrac{12v}{\mu(N-1)N(N+1)}\right| > 0.5$ , k is a sequence number, in the third sequence, of an element in the 2nd subsequence, $\mu$ is less than 0, v is greater than 0, and s is greater than 0;
the 3rd subsequence in the M subsequences satisfies the 3rd relationship in the M relationships, and the 3rd relationship is: values of elements in the 3rd subsequence are all third values; and
the first value and the third value are both greater than the second value.

In this design, the third sequence is a sequence in a concave form, and the integrated sensing and communication signal is generated by using the third sequence, so that a root-mean-square bandwidth of the integrated sensing and communication signal can be increased, to improve ranging precision of the integrated sensing and communication signal.

In another possible design, a value obtained by dividing a quantity of subcarriers included in the 1st frequency domain subresource by a quantity N of all subcarriers included in the first frequency domain resource is less than 0.25; a value obtained by dividing a quantity of subcarriers included in the 3rd frequency domain subresource by the quantity N of all subcarriers included in the first frequency domain resource is less than 0.25; or a value obtained by dividing a sum of quantities of subcarriers included in the 1st frequency domain subresource and the 3rd frequency domain subresource by the quantity N of all subcarriers included in the first frequency domain resource is less than 0.5.

In another possible design, the first value is equal to the third value.

In another possible design, the quantity of subcarriers included in the 1st frequency domain subresource is equal to the quantity of subcarriers included in the 3rd frequency domain subresource.

In another possible design, M is equal to 5, a start frequency of the t1th frequency domain subresource in the M frequency domain subresources is less than a start frequency of the t2th frequency domain subresource in the M frequency domain subresources, t1 is an integer greater than or equal to 1 and less than M, t2 is an integer greater than 1 and less than or equal to M, and t1 is less than t2;

the 1st subsequence in the M subsequences satisfies the 1st relationship in the M relationships, and the 1st relationship is: values of elements in the 1st subsequence are all first values;
the 2nd subsequence in the M subsequences satisfies the 2nd relationship in the M relationships, and the 2nd relationship is: values of elements in the 2nd subsequence are all 1s;
the 3rd subsequence in the M subsequences satisfies the 3rd relationship in the M relationships, and the 3rd relationship is:

values of elements in the 3rd subsequence are all second values, a value of an element in the 3rd subsequence satisfies a polynomial function of a square of $(k-(N-1)/2)$, or a value of an element in the 3rd subsequence satisfies

a functional relationship $\sqrt{\dfrac{1}{\mu(k-\dfrac{N-1}{2})^2 + v} + s}$ , where $\left|\dfrac{12v}{\mu(N-1)N(N+1)}\right| > 0.5$ , k is a sequence number, in the third sequence, of an element in the 3rd subsequence, $\mu$ is less than 0, v is greater than 0, and s is greater than 0;
the 4th subsequence in the M subsequences satisfies the 4th relationship in the M relationships, and the 4th relationship is: values of elements in the 4th subsequence are all 1s;
the 5th subsequence in the M subsequences satisfies the 5th relationship in the M relationships, and the 5th relationship is: values of elements in the 5th subsequence are all third values; and
the first value and the third value are both greater than 1, and the second value is greater than 0 and less than or equal to 1.

In this design, the third sequence is a sequence in a concave form, and the integrated sensing and communication signal is generated by using the third sequence, so that a root-mean-square bandwidth of the integrated sensing and communication signal can be increased, to improve ranging precision of the integrated sensing and communication signal.

In another possible design, a quantity of subcarriers included in the $1^{st}$ frequency domain subresource is equal to a quantity of subcarriers included in the $5^{th}$ frequency domain subresource, and/or a quantity of subcarriers included in the $2^{nd}$ frequency domain subresource is equal to a quantity of subcarriers included in the $4^{th}$ frequency domain subresource.

In another possible design, the first value is equal to the third value.

In another possible design, the $k^{th}$ element in the third sequence is less than or equal to a larger value in the $k1^{th}$ element in the third sequence and the $k2^{th}$ element in the third sequence, where k, kl, and k2 are all integers greater than or equal to 1 and less than or equal to N, k2 is greater than k1, and k is greater than or equal to k1 and less than or equal to k2. In this design, the third sequence is a sequence in a concave form, and the integrated sensing and communication signal is generated by using the third sequence, so that a root-mean-square bandwidth of the integrated sensing and communication signal can be increased, to improve ranging precision of the integrated sensing and communication signal.

In another possible design, the $1^{st}$ subsequence in the M subsequences satisfies the $1^{st}$ relationship in the M relationships, and the $1^{st}$ relationship is: the $k1^{th}$ element in the $1^{st}$ subsequence is greater than or equal to the $k2^{th}$ element in the $1^{st}$ subsequence. The $2^{nd}$ subsequence in the M subsequences satisfies the $2^{nd}$ relationship in the M relationships, and the $2^{nd}$ relationship is: the $k^{th}$ element in the $2^{nd}$ subsequence is greater than or equal to a smaller value in the $k1^{th}$ element in the $2^{nd}$ subsequence and the $k2^{th}$ element in the $2^{nd}$ subsequence. The $3^{rd}$ subsequence in the M subsequences satisfies the $3^{rd}$ relationship in the M relationships, and the $3^{rd}$ relationship is: the $k1^{th}$ element in the $3^{rd}$ subsequence is less than or equal to the $k2^{th}$ elements in the $3^{rd}$ subsequence, where k, k1, and k2 are all integers greater than or equal to 1 and less than or equal to N, k2 is greater than k1, and k is greater than or equal to k1 and less than or equal to k2. It can be learned that the $1^{st}$ subsequence is a monotonically decreasing sequence, the $2^{nd}$ subsequence is a sequence in a convex form, and the $3^{rd}$ subsequence is a monotonically increasing sequence.

In this design, the third sequence includes a subsequence in a convex form, and the integrated sensing and communication signal is generated by using the third sequence. A lower peak-to-sidelobe ratio of a range spectrum is obtained by sensing by using the integrated sensing and communication signal, to reduce a false alarm probability of sensing.

In another possible design, a sum of squares of all elements in the third sequence is equal to N.

In another possible design, first information sent by a first network device is received. The first information indicates parameter information of the third sequence, and the parameter information includes a plurality of sets of parameters used to determine the third sequence. The parameters may be used to determine a plurality of relationships. The second terminal device determines the third sequence based on the first information, and processes the first signal based on the third sequence, to obtain the second sequence. The third sequence is multiplied by the second sequence to obtain different first sequences, and the first signals are generated by using the different first sequences for sensing, to adapt to different sensing performance requirements.

In another possible design, the first signal is used for sensing, the first signal is used for sensing and channel measurement, the first signal is used for sensing and channel estimation, or the first signal is used for sensing and data transmission. Sensing and communication are implemented by using the first signal.

According to a fifth aspect, an embodiment of this application provides a communication apparatus. The communication apparatus is a first network device, or a unit or module in the first network device, and includes:

a processing module, configured to generate a first signal based on a first sequence, where the first sequence is a product of a second sequence and a third sequence, where
the first sequence includes N first elements, the second sequence includes N second elements, the second sequence carries data, and the third sequence includes N third elements greater than or equal to 0;
the $i^{th}$ element in the second sequence corresponds to the $i^{th}$ subcarrier in N subcarriers in a first frequency domain resource, the $i^{th}$ element in the third sequence corresponds to the $i^{th}$ subcarrier in the first frequency domain resource, the $i^{th}$ element in the first sequence is carried on the $i^{th}$ subcarrier in the first frequency domain resource, N is an integer greater than 1, and i is an integer greater than or equal to 1 and less than or equal to N; and
the first frequency domain resource includes M non-overlapping frequency domain subresources, the third sequence includes M subsequences, the $t^{th}$ subsequence in the M subsequences corresponds to the $t^{th}$ frequency domain subresource in the M frequency domain subresources, the $t^{th}$ subsequence in the M subsequences satisfies the $t^{th}$ relationship in M relationships, M is an integer greater than or equal to 2 and less than or equal to N, and t is an integer greater than or equal to 1 and less than or equal to M; and
a sending module, configured to send the first signal.

In another possible design, the $i^{th}$ element in the third sequence is equal to the $(N-i+1)^{th}$ element in the third sequence.

In another possible design, values of elements in at least one of the M subsequences are all the same.

In another possible design, M is equal to 3, a start frequency of the t1$^{th}$ frequency domain subresource in the M frequency domain subresources is less than a start frequency of the 12$^{th}$ frequency domain subresource in the M frequency domain subresources, t1 is an integer greater than or equal to 1 and less than M, t2 is an integer greater than 1 and less than or equal to M, and t1 is less than t2;

the 1$^{st}$ subsequence in the M subsequences satisfies the 1$^{st}$ relationship in the M relationships, and the 1$^{st}$ relationship is: values of elements in the 1$^{st}$ subsequence are all first values;

the 2$^{nd}$ subsequence in the M subsequences satisfies the 2$^{nd}$ relationship in the M relationships, and the 2$^{nd}$ relationship is:

values of elements in the 2$^{nd}$ subsequence are all second values, a value of an element in the 2$^{nd}$ subsequence satisfies a polynomial function of a square of $(k-(N-1)/2)$, or a value of an element in the 2$^{nd}$ subsequence satisfies a functional relationship $\sqrt{\dfrac{1}{\mu(k-\dfrac{N-1}{2})^2+v}+s}$ , where $\left|\dfrac{12v}{\mu(N-1)N(N+1)}\right|>0.5$ , k is a sequence number, in the third sequence, of an element in the 2$^{nd}$ subsequence, $\mu$ is less than 0, v is greater than 0, and s is greater than 0;

the 3$^{rd}$ subsequence in the M subsequences satisfies the 3$^{rd}$ relationship in the M relationships, and the 3$^{rd}$ relationship is: values of elements in the 3$^{rd}$ subsequence are all third values; and

the first value and the third value are both greater than the second value.

In another possible design, M is equal to 5, a start frequency of the t1th frequency domain subresource in the M frequency domain subresources is less than a start frequency of the t2th frequency domain subresource in the M frequency domain subresources, t1 is an integer greater than or equal to 1 and less than M, t2 is an integer greater than 1 and less than or equal to M, and t1 is less than t2;

the 1$^{st}$ subsequence in the M subsequences satisfies the 1$^{st}$ relationship in the M relationships, and the 1$^{st}$ relationship is: values of elements in the 1$^{st}$ subsequence are all first values;

the 2$^{nd}$ subsequence in the M subsequences satisfies the 2$^{nd}$ relationship in the M relationships, and the 2$^{nd}$ relationship is: values of elements in the 2$^{nd}$ subsequence are all 1s;

the 3$^{rd}$ subsequence in the M subsequences satisfies the 3$^{rd}$ relationship in the M relationships, and the 3$^{rd}$ relationship is:

values of elements in the 3$^{rd}$ subsequence are all second values, a value of an element in the 3$^{rd}$ subsequence satisfies a polynomial function of a square of $(k-(N-1)/2)$, or a value of an element in the 3$^{rd}$ subsequence satisfies a functional relationship $\sqrt{\dfrac{1}{\mu(k-\dfrac{N-1}{2})^2+v}+s}$ , where $\left|\dfrac{12v}{\mu(N-1)N(N+1)}\right|>0.5$ , k is a sequence number, in the third sequence, of an element in the 3$^{rd}$ subsequence, $\mu$ is less than 0, v is greater than 0, and s is greater than 0;

the 4$^{th}$ subsequence in the M subsequences satisfies the 4$^{th}$ relationship in the M relationships, and the 4$^{th}$ relationship is: values of elements in the 4$^{th}$ subsequence are all 1s;

the 5$^{th}$ subsequence in the M subsequences satisfies the 5$^{th}$ relationship in the M relationships, and the 5$^{th}$ relationship is: values of elements in the 5$^{th}$ subsequence are all third values; and

the first value and the third value are both greater than 1, and the second value is greater than 0 and less than or equal to 1.

In another possible design, the sending module is further configured to send first information to a second network device and/or a terminal device, where the first information indicates parameter information of the third sequence, and the parameter information includes at least one of the following: the first value, the second value, the third value, $\mu$, v, s, and M.

In another possible design, the first signal is used for sensing, the first signal is used for sensing and channel measurement, the first signal is used for sensing and channel estimation, or the first signal is used for sensing and data transmission.

In another possible design, the apparatus further includes a receiving module, configured to receive an echo signal of the first signal.

For operations performed by the communication apparatus and beneficial effect thereof, refer to the method according to the first aspect and the beneficial effect thereof. Repeated parts are not described again.

According to a sixth aspect, an embodiment of this application provides a communication apparatus. The communication apparatus is a second network device, or a unit or module in the second network device, and includes:

a receiving module, configured to receive an echo signal of a first signal, where the first signal is generated based on a first sequence, and the first sequence is a product of a second sequence and a third sequence, where

the first sequence includes N first elements, the second sequence includes N second elements, the second sequence carries data, and the third sequence includes N third elements greater than or equal to 0;

the $i^{th}$ element in the second sequence corresponds to the $i^{th}$ subcarrier in N subcarriers in a first frequency domain resource, the $i^{th}$ element in the third sequence corresponds to the $i^{th}$ subcarrier in the first frequency domain resource, the $i^{th}$ element in the first sequence is carried on the $i^{th}$ subcarrier in the first frequency domain resource, N is an integer greater than 1, and i is an integer greater than or equal to 1 and less than or equal to N; and

the first frequency domain resource includes M non-overlapping frequency domain subresources, the third sequence includes M subsequences, the $t^{th}$ subsequence in the M subsequences corresponds to the $t^{th}$ frequency domain subresource in the M frequency domain subresources, the $t^{th}$ subsequence in the M subsequences satisfies the $t^{th}$ relationship in M relationships, M is an integer greater than or equal to 2 and less than or equal to N, and t is an integer greater than or equal to 1 and less than or equal to M.

In another possible design, the $i^{th}$ element in the third sequence is equal to the $(N-i+1)^{th}$ element in the third sequence.

In another possible design, values of elements in at least one of the M subsequences are all the same.

In another possible design, M is equal to 3, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;

the $2^{nd}$ subsequence in the M subsequences satisfies the $2^{nd}$ relationship in the M relationships, and the $2^{nd}$ relationship is:

values of elements in the $2^{nd}$ subsequence are all second values, a value of an element in the $2^{nd}$ subsequence satisfies a polynomial function of a square of $(k-(N-1)/2)$, or a value of an element in the $2^{nd}$ subsequence satisfies a functional relationship $\sqrt{\dfrac{1}{\mu(k-\dfrac{N-1}{2})^2 + v} + s}$, where $\left| \dfrac{12v}{\mu(N-1)N(N+1)} \right| > 0.5$, k is a sequence number, in the third sequence, of an element in the $2^{nd}$ subsequence, $\mu$ is less than 0, v is greater than 0, and s is greater than 0;

the $3^{rd}$ subsequence in the M subsequences satisfies the $3^{rd}$ relationship in the M relationships, and the $3^{rd}$ relationship is: values of elements in the $3^{rd}$ subsequence are all third values; and

the first value and the third value are both greater than the second value.

In another possible design, M is equal to 5, a start frequency of the t1th frequency domain subresource in the M frequency domain subresources is less than a start frequency of the t2th frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;

the $2^{nd}$ subsequence in the M subsequences satisfies the $2^{nd}$ relationship in the M relationships, and the $2^{nd}$ relationship is: values of elements in the $2^{nd}$ subsequence are all 1s;

the $3^{rd}$ subsequence in the M subsequences satisfies the $3^{rd}$ relationship in the M relationships, and the $3^{rd}$ relationship is:

values of elements in the 3rd subsequence are all second values, a value of an element in the 3rd subsequence satisfies a polynomial function of a square of $(k\text{-}(N\text{-}1)/2)$, or a value of an element in the 3rd subsequence satisfies

a functional relationship $\sqrt{\dfrac{\dfrac{1}{\mu(k-\dfrac{N-1}{2})^2+v}+s}{}}$ , where $\left|\dfrac{12v}{\mu(N-1)N(N+1)}\right| > 0.5$ , k is a sequence number, in the third sequence, of an element in the 3rd subsequence, $\mu$ is less than 0, v is greater than 0, and s is greater than 0;

the 4th subsequence in the M subsequences satisfies the 4th relationship in the M relationships, and the 4th relationship is: values of elements in the 4th subsequence are all 1s;

the 5th subsequence in the M subsequences satisfies the 5th relationship in the M relationships, and the 5th relationship is: values of elements in the 5th subsequence are all third values; and

the first value and the third value are both greater than 1, and the second value is greater than 0 and less than or equal to 1.

In another possible design, the receiving module is further configured to receive first information sent by a first network device, where the first information indicates parameter information of the third sequence, and the parameter information includes at least one of the following: the first value, the second value, the third value, $\mu$, v, s, and M.

In another possible design, the first signal is used for sensing, the first signal is used for sensing and channel measurement, the first signal is used for sensing and channel estimation, or the first signal is used for sensing and data transmission.

For operations performed by the communication apparatus and beneficial effect thereof, refer to the method according to the second aspect and the beneficial effect thereof. Repeated parts are not described again.

According to a seventh aspect, an embodiment of this application provides a communication apparatus. The communication apparatus is a first terminal device, or a unit or module in the first terminal device, and includes:

a receiving module, configured to receive a first signal, where the first signal is generated based on a first sequence, and the first sequence is a product of a second sequence and a third sequence, where

the first sequence includes N first elements, the second sequence includes N second elements, the second sequence carries data, and the third sequence includes N third elements greater than or equal to 0;

the $i^{th}$ element in the second sequence corresponds to the $i^{th}$ subcarrier in N subcarriers in a first frequency domain resource, the $i^{th}$ element in the third sequence corresponds to the $i^{th}$ subcarrier in the first frequency domain resource, the $i^{th}$ element in the first sequence is carried on the $i^{th}$ subcarrier in the first frequency domain resource, N is an integer greater than 1, and i is an integer greater than or equal to 1 and less than or equal to N; and

the first frequency domain resource includes M non-overlapping frequency domain subresources, the third sequence includes M subsequences, the $t^{th}$ subsequence in the M subsequences corresponds to the $t^{th}$ frequency domain subresource in the M frequency domain subresources, the $t^{th}$ subsequence in the M subsequences satisfies the $t^{th}$ relationship in M relationships, M is an integer greater than or equal to 2 and less than or equal to N, and t is an integer greater than or equal to 1 and less than or equal to M.

In another possible design, the $i^{th}$ element in the third sequence is equal to the $(N\text{-}i\text{+}1)^{th}$ element in the third sequence.

In another possible design, values of elements in at least one of the M subsequences are all the same.

In another possible design, M is equal to 3, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;

the $2^{nd}$ subsequence in the M subsequences satisfies the $2^{nd}$ relationship in the M relationships, and the $2^{nd}$ relationship is:

values of elements in the $2^{nd}$ subsequence are all second values, a value of an element in the $2^{nd}$ subsequence satisfies a polynomial function of a square of $(k\text{-}(N\text{-}1)/2)$, or a value of an element in the $2^{nd}$ subsequence satisfies a functional relationship $\sqrt{\dfrac{1}{\mu(k-\frac{N-1}{2})^2+v}+s}$ , where $\left|\dfrac{12v}{\mu(N-1)N(N+1)}\right|>0.5$ , k is a sequence number, in the third sequence, of an element in the 2nd subsequence, $\mu$ is less than 0, v is greater than 0, and s is greater than 0;

the 3rd subsequence in the M subsequences satisfies the 3rd relationship in the M relationships, and the 3rd relationship is: values of elements in the 3rd subsequence are all third values; and

the first value and the third value are both greater than the second value.

In another possible design, M is equal to 5, a start frequency of the t1th frequency domain subresource in the M frequency domain subresources is less than a start frequency of the t2th frequency domain subresource in the M frequency domain subresources, t1 is an integer greater than or equal to 1 and less than M, t2 is an integer greater than 1 and less than or equal to M, and t1 is less than t2;

the 1st subsequence in the M subsequences satisfies the 1st relationship in the M relationships, and the 1st relationship is: values of elements in the 1st subsequence are all first values;

the 2nd subsequence in the M subsequences satisfies the 2nd relationship in the M relationships, and the 2nd relationship is: values of elements in the 2nd subsequence are all 1s;

the 3rd subsequence in the M subsequences satisfies the 3rd relationship in the M relationships, and the 3rd relationship is:

values of elements in the 3rd subsequence are all second values, a value of an element in the 3rd subsequence satisfies a polynomial function of a square of ($k$-($N$-1)/2), or a value of an element in the 3rd subsequence satisfies

a functional relationship $\sqrt{\dfrac{1}{\mu(k-\frac{N-1}{2})^2+v}+s}$ , where $\left|\dfrac{12v}{\mu(N-1)N(N+1)}\right|>0.5$ , k is a sequence number, in the third sequence, of an element in the 3rd subsequence, $\mu$ is less than 0, v is greater than 0, and s is greater than 0;

the 4th subsequence in the M subsequences satisfies the 4th relationship in the M relationships, and the 4th relationship is: values of elements in the 4th subsequence are all 1s;

the 5th subsequence in the M subsequences satisfies the 5th relationship in the M relationships, and the 5th relationship is: values of elements in the 5th subsequence are all third values; and

the first value and the third value are both greater than 1, and the second value is greater than 0 and less than or equal to 1.

In another possible design, the receiving module is further configured to receive first information sent by a first network device, where the first information indicates parameter information of the third sequence, and the parameter information includes at least one of the following: the first value, the second value, the third value, $\mu$, v, s, and M.

A processing module is configured to obtain the second sequence from the first signal based on the first information.

For operations performed by the communication apparatus and beneficial effect thereof, refer to the method according to the third aspect and the beneficial effect thereof. Repeated parts are not described again.

According to an eighth aspect, an embodiment of this application provides a communication apparatus. The communication apparatus is a second terminal device, or a unit or module in the second terminal device, and includes:

a receiving module, configured to receive an echo signal of a first signal, where the first signal is generated based on a first sequence, and the first sequence is a product of a second sequence and a third sequence, where

the first sequence includes N first elements, the second sequence includes N second elements, the second sequence carries data, and the third sequence includes N third elements greater than or equal to 0;

the ith element in the second sequence corresponds to the ith subcarrier in N subcarriers in a first frequency domain resource, the ith element in the third sequence corresponds to the ith subcarrier in the first frequency domain resource, the ith element in the first sequence is carried on the ith subcarrier in the first frequency domain resource, N is an integer greater than 1, and i is an integer greater than or equal to 1 and less than or equal to N; and

the first frequency domain resource includes M non-overlapping frequency domain subresources, the third sequence includes M subsequences, the tth subsequence in the M subsequences corresponds to the tth frequency domain

subresource in the M frequency domain subresources, the $t^{th}$ subsequence in the M subsequences satisfies the $t^{th}$ relationship in M relationships, M is an integer greater than or equal to 2 and less than or equal to N, and t is an integer greater than or equal to 1 and less than or equal to M.

In another possible design, the $i^{th}$ element in the third sequence is equal to the $(N-i+1)^{th}$ element in the third sequence.

In another possible design, values of elements in at least one of the M subsequences are all the same.

In another possible design, M is equal to 3, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;

the $2^{nd}$ subsequence in the M subsequences satisfies the $2^{nd}$ relationship in the M relationships, and the $2^{nd}$ relationship is:

values of elements in the $2^{nd}$ subsequence are all second values, a value of an element in the $2^{nd}$ subsequence satisfies a polynomial function of a square of $(k-(N-1)/2)$, or a value of an element in the $2^{nd}$ subsequence satisfies a functional relationship $\sqrt{\dfrac{1}{\mu(k-\dfrac{N-1}{2})^2+v}+s}$ , where $\left|\dfrac{12v}{\mu(N-1)N(N+1)}\right| > 0.5$ , k is a sequence number, in the third sequence, of an element in the $2^{nd}$ subsequence, $\mu$ is less than 0, v is greater than 0, and s is greater than 0;

the $3^{rd}$ subsequence in the M subsequences satisfies the $3^{rd}$ relationship in the M relationships, and the $3^{rd}$ relationship is: values of elements in the $3^{rd}$ subsequence are all third values; and

the first value and the third value are both greater than the second value.

In another possible design, M is equal to 5, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;

the $2^{nd}$ subsequence in the M subsequences satisfies the $2^{nd}$ relationship in the M relationships, and the $2^{nd}$ relationship is: values of elements in the $2^{nd}$ subsequence are all 1s;

the $3^{rd}$ subsequence in the M subsequences satisfies the $3^{rd}$ relationship in the M relationships, and the $3^{rd}$ relationship is:

values of elements in the $3^{rd}$ subsequence are all second values, a value of an element in the $3^{rd}$ subsequence satisfies a polynomial function of a square of $(k-(N-1)/2)$, or a value of an element in the $3^{rd}$ subsequence satisfies a functional relationship $\sqrt{\dfrac{1}{\mu(k-\dfrac{N-1}{2})^2+v}+s}$ , where $\left|\dfrac{12v}{\mu(N-1)N(N+1)}\right| > 0.5$ , k is a sequence number, in the third sequence, of an element in the $3^{rd}$ subsequence, $\mu$ is less than 0, v is greater than 0, and s is greater than 0;

the $4^{th}$ subsequence in the M subsequences satisfies the $4^{th}$ relationship in the M relationships, and the $4^{th}$ relationship is: values of elements in the $4^{th}$ subsequence are all 1s;

the $5^{th}$ subsequence in the M subsequences satisfies the $5^{th}$ relationship in the M relationships, and the $5^{th}$ relationship is: values of elements in the $5^{th}$ subsequence are all third values; and

the first value and the third value are both greater than 1, and the second value is greater than 0 and less than or equal to 1.

In another possible design, the receiving module is further configured to receive first information sent by a first network device, where the first information indicates parameter information of the third sequence, and the parameter information includes at least one of the following: the first value, the second value, the third value, $\mu$, v, s, and M.

In another possible design, the first signal is used for sensing, the first signal is used for sensing and channel measurement, the first signal is used for sensing and channel estimation, or the first signal is used for sensing and data transmission.

For operations performed by the communication apparatus and beneficial effect thereof, refer to the method according to the fourth aspect and the beneficial effect thereof. Repeated parts are not described again.

According to a ninth aspect, this application provides a communication apparatus. The communication apparatus includes a processor and a memory. The memory is configured to store a computer program. The processor is configured to execute the computer program stored in the memory, to enable the communication apparatus to perform the method according to any one of the first aspect or the possible designs.

According to a tenth aspect, this application provides a communication apparatus. The communication apparatus includes a processor and a memory. The memory is configured to store a computer program. The processor is configured to execute the computer program stored in the memory, to enable the communication apparatus to perform the method according to any one of the second aspect or the possible designs.

According to an eleventh aspect, this application provides a communication apparatus. The communication apparatus includes a processor and a memory. The memory is configured to store a computer program. The processor is configured to execute the computer program stored in the memory, to enable the communication apparatus to perform the method according to any one of the third aspect or the possible designs.

According to a twelfth aspect, this application provides a communication apparatus. The communication apparatus includes a processor and a memory. The memory is configured to store a computer program. The processor is configured to execute the computer program stored in the memory, to enable the communication apparatus to perform the method according to any one of the fourth aspect or the possible designs.

According to a thirteenth aspect, this application provides a computer-readable storage medium. The computer-readable storage medium is configured to store a computer program, and when the computer program is executed, the method according to any one of the first aspect to the fourth aspect is implemented.

According to a fourteenth aspect, this application provides a computer program product including a computer program. When the computer program is executed, the method according to any one of the first aspect to the fourth aspect is implemented.

According to a fifteenth aspect, an embodiment of this application provides a communication system. The communication system includes a first network device, a second network device, a first terminal device, and a second terminal device. The first network device is configured to perform the steps in the first aspect, the second network device is configured to perform the steps in the second aspect, the first terminal device is configured to perform the steps in the third aspect, and the second terminal device is configured to perform the steps in the fourth aspect.

BRIEF DESCRIPTION OF DRAWINGS

To describe the technical solutions in embodiments of this application or in the background more clearly, the following briefly describes the accompanying drawings for describing embodiments of this application or the background.

FIG. 1(a) is a diagram of a sensing scenario according to an embodiment of this application;
FIG. 1(b) is a diagram of another sensing scenario according to an embodiment of this application;
FIG. 1(c) is a diagram of another sensing scenario according to an embodiment of this application;
FIG. 2 is a schematic flowchart of a communication method according to an embodiment of this application;
FIG. 3 is a diagram of a third sequence according to this application;
FIG. 4 is a diagram of a sequence processing process according to an embodiment of this application;
FIG. 5 is a diagram of a third sequence according to an embodiment of this application;
FIG. 6 is a diagram of another third sequence according to an embodiment of this application;
FIG. 7 is a diagram of another third sequence according to an embodiment of this application;
FIG. 8 is a diagram of another third sequence according to an embodiment of this application;
FIG. 9 is a diagram of another third sequence according to an embodiment of this application;
FIG. 10 is a diagram of a structure of a communication apparatus according to an embodiment of this application;
FIG. 11 is a diagram of a structure of another communication apparatus according to an embodiment of this application;
FIG. 12 is a diagram of a structure of a network device according to an embodiment of this application; and
FIG. 13 is a diagram of a structure of a terminal device according to an embodiment of this application.

DESCRIPTION OF EMBODIMENTS

The following explains key terms in this application.

Sensing: Sensing is to detect parameters of a target in a physical environment, for example, a location of the target and a speed of the target. It may be understood that a radar detection system detects a target by transmitting an electromagnetic wave and analyzing an echo signal reflected by an object. The sensing may also be referred to as detection.

A sensing signal is a signal for sensing (or detecting) a sensed target (or referred to as a target object). The sensing signal is also referred to as a detection signal, a linear frequency modulation signal, a radar signal, a radar sensing signal, a radar detection signal, an environment sensing signal, or the like. The sensing signal may be a pulse signal, or may be a signal in a wireless communication system. For example, the sensing signal may be an orthogonal frequency division multiplexing (orthogonal frequency division multiplexing, OFDM) signal obtained by modulating a specific sequence on a subcarrier. The specific sequence may be any one of the following sequences: a Zadoff-Chu sequence (ZC sequence for short), a pseudo-random sequence, a predefined sequence, and the like. The pseudo-random sequence includes any one of the following sequences: a maximal-length linear feedback shift register sequence (m sequence for short), a Gold sequence, and the like. The predefined sequence may be a random data symbol. For example, the predefined sequence may be a random data symbol modulated in a manner such as quadrature phase shift keying (quadrature phase shift keying, QPSK) or 16 quadrature amplitude modulation (quadrature amplitude modulation, QAM).

An integrated sensing and communication signal is also referred to as a sensing-communication integrated signal, and is a signal used for both communication and sensing. "Used for communication" may be understood as: the signal carries communication data or a communication reference signal sequence that needs to be transmitted between communication devices.

A communication signal is a signal transmitted between communication devices for communication, for example, a signal transmitted between a network device and a terminal device. The communication signal is, for example, a signal carried on a physical downlink shared channel (physical downlink shared channel, PDSCH).

The communication method provided in embodiments of this application may be applied to a fourth generation (4th generation, 4G) communication system, for example, a long term evolution (long term evolution, LTE) communication system, or may be applied to a fifth generation (5th generation, 5G) communication system, for example, a 5G new radio (new radio, NR) communication system, or may be applied to various communication systems evolved after 5G, for example, a sixth generation (6th generation, 6G) communication system. The method provided in embodiments of this application may be further applied to a Bluetooth system, a wireless fidelity (wireless fidelity, Wi-Fi) system, a long range radio (long range radio, LoRa) system, or an internet of vehicles system. The method provided in embodiments of this application may be further applied to a satellite communication system. The satellite communication system may be integrated with the foregoing communication system.

This application may be applied to the following scenarios:

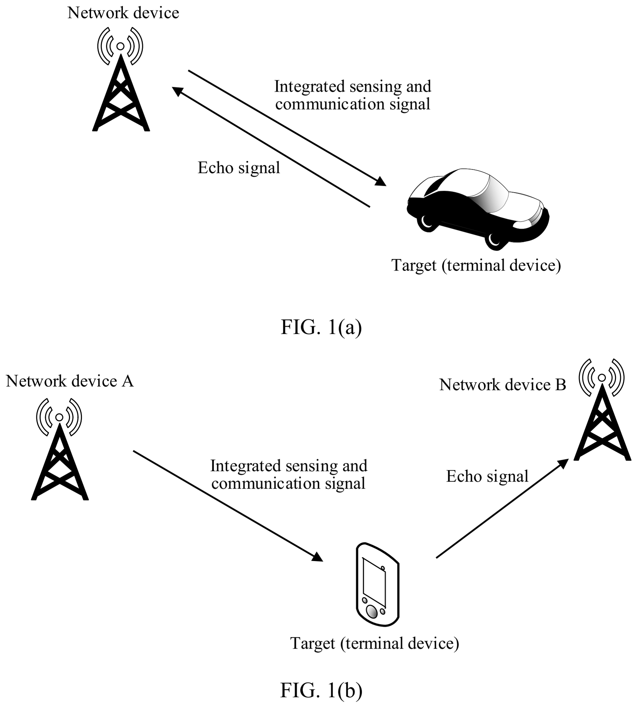

FIG. 1(a) is a diagram of a sensing scenario according to an embodiment of this application. A network device transmits a sensing signal or an integrated sensing and communication signal, and the network device receives an echo signal generated when the sensing signal or the integrated sensing and communication signal is reflected by a target in an environment, to sense information such as location and speed of the target. It should be noted that the target in the environment and a terminal device may be a same device, or may be different devices. For example, when the target in the environment and the terminal device are a same device, the network device A sends an integrated sensing and communication signal for sensing, and the integrated sensing and communication signal further carries communication data or a communication reference signal sequence that needs to be transmitted by the network device to the terminal device. When the target in the environment and the terminal device are different devices, the network device sends a sensing signal to sense the target, and simultaneously sends a communication signal in a manner such as frequency division multiplexing or space division multiplexing, to communicate with the terminal device.

FIG. 1(b) is a diagram of another sensing scenario according to an embodiment of this application. A network device A transmits a sensing signal or an integrated sensing and communication signal. Another network device B receives an echo signal generated when the sensing signal or the integrated sensing and communication signal is reflected by a target in an environment, to sense information such as location and speed of the target. It should be noted that the target in the environment and a terminal device may be a same device, or may be different devices. For example, when the target in the environment and the terminal device are a same device, the network device A sends an integrated sensing and communication signal for sensing, and the integrated sensing and communication signal carries communication data or a communication reference signal sequence that needs to be transmitted by the network device to the terminal device. When the target in the environment and the terminal device are different devices, the network device A sends a sensing signal to sense the target, and simultaneously sends a communication signal in a manner such as frequency division multiplexing or space division multiplexing, to communicate with the terminal device.

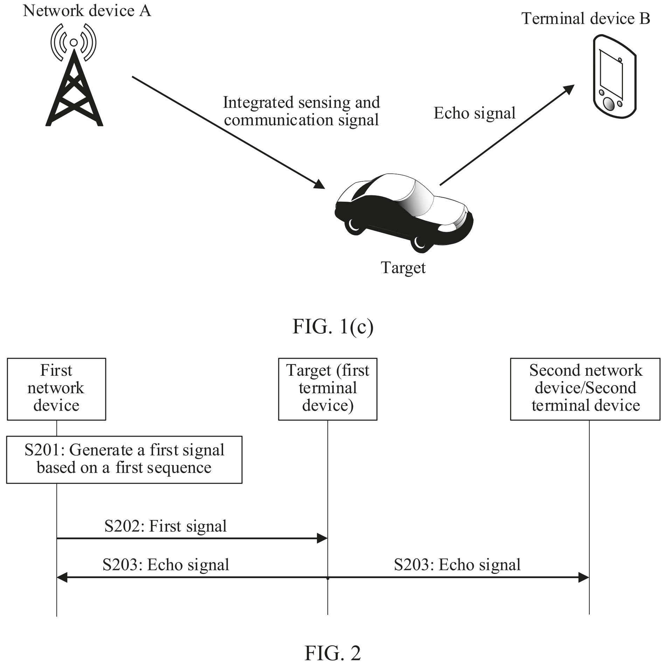

FIG. 1(c) is a diagram of another sensing scenario according to an embodiment of this application. A network device A transmits an integrated sensing and communication signal, and a terminal device B receives an echo signal generated when the integrated sensing and communication signal is reflected by a target in an environment, to sense information such as location and speed of the target. It should be noted that the target in the environment and the terminal device B are different devices. The network device A sends an integrated sensing and communication signal for sensing, and the integrated sensing and communication signal carries communication data or a communication reference signal sequence that needs to be transmitted by the network device A to the terminal device B.

As shown in the figures, the communication system in this application includes a network device and a terminal device.

The network device is a network side device having a wireless transceiver function. For example, the network device may be a base station (base station), an evolved NodeB (evolved NodeB, eNodeB), a next generation NodeB (next generation NodeB, gNB) in a 5G mobile communication system, a transmission reception point (transmission reception point, TRP), a base station evolved from the 3GPP, an access node in a Wi-Fi system, a wireless relay node, a wireless backhaul node, or the like. The network device may include one or more co-site or non-co-site transmission reception points. For another example, the network device may include a central unit (central unit, CU), a distributed unit (distributed unit, DU), or a CU and a DU. In this way, some functions of a radio access network device may be implemented by a plurality of network function entities. These network function entities may be network elements in a hardware device, may be software functions run on dedicated hardware, or may be virtualized functions instantiated on a platform (for example, a cloud platform). For another example, in a vehicle to everything (vehicle to everything, V2X) technology, a network device may be a roadside unit (road side unit, RSU). A plurality of network devices in the communication system may be base stations of a same type, or may be base stations of different types. The base station may communicate with the terminal device, or may communicate with the terminal device through a relay station. The network device in this application may also be a device having a sensing function. The device may transmit a sensing signal, and receive and process a signal reflected by a target in an environment. In embodiments of this application, a communication apparatus configured to implement a function of the network device may be the network device, may be a network device that has some functions of a base station, or may be an apparatus that can support the network device in implementing the function, for example, a chip system, where the apparatus may be installed in the network device.

Types of a plurality of network devices in the communication system may be the same or may be different. The network device in this application may also be a device having a sensing function. For example, the network device may transmit a sensing signal, and receive and process an echo signal reflected by a target in an environment.

In embodiments of this application, the network device may be a device in a wireless network. For example, the network device may be a device that is deployed in a radio access network and that provides a wireless communication function for the terminal device. For example, the network device may be a radio access network (radio access network, RAN) node that connects the terminal device to the wireless network, and may also be referred to as an access network device. In embodiments of this application, a communication apparatus configured to implement a function of the network device may be the network device, may be a network device that has some functions of a base station, or may be an apparatus that can support the network device in implementing the function, for example, a chip system, where the apparatus may be installed in the network device or used in conjunction with the network device.

The terminal device is a user-side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is used to connect people, things, machines, and the like, and may be widely used in various scenarios, for example, cellular communication, device-to-device (device-to-device, D2D) communication, V2X communication, machine-to-machine/machine-type communication (machine-to-machine/machine-type communications, M2M/MTC), the internet of things (internet of things, IoT), virtual reality (virtual reality, VR), augmented reality (augmented reality, AR), industrial control (industrial control), self driving (self driving), telemedicine (remote medical), a smart grid (smart grid), smart furniture, smart office, smart wearable, smart transportation, a smart city (smart city), an uncrewed aerial vehicle, and a robot. For example, the terminal device may be a handheld terminal in cellular communication, a communication device in D2D, an internet of things device in MTC, a surveillance camera in smart transportation and a smart city, or a communication device in an uncrewed aerial vehicle. The terminal device may be sometimes referred to as user equipment (user equipment, UE), a user terminal, a user apparatus, a subscriber unit, a subscriber station, a terminal, an access terminal, an access station, a UE station, a remote station, a mobile device, a wireless communication device, or the like.

In the system shown in this application, the network device may sense a target by sending a sensing signal or an integrated sensing and communication signal. The target may be various tangible objects that can reflect an electromagnetic wave in an environment, for example, a ground object such as a mountain, a forest, or a building, or may include a movable object such as a vehicle, an uncrewed aerial vehicle, a pedestrian, or a terminal device. The target may also be referred to as a sensed target, a detected target, a sensed object, a detected object, a sensed device, or the like. This is not limited in embodiments of this application.

The network device may use a communication signal in an existing 5G communication system as the integrated sensing and communication signal. The communication signal in the 5G communication system is generated based on an OFDM modulation scheme, and a generation formula of the communication signal is as follows: A formula of a time-continuous signal $s_l^{(p,\mu)}(t)$ of an OFDM symbol with a subcarrier configuration $\mu$ and a number $l$ on a port p is:

$$s_l^{(p,\mu)}(t) = \sum_{k=0}^{N_{\text{grid},x}^{\text{size},\mu} N_{\text{sc}}^{\text{RB}}-1} a_{k,l}^{(p,\mu)} e^{j2\pi\left(k-N_{\text{grid},x}^{\text{size},\mu} N_{\text{sc}}^{\text{RB}}/2\right)\Delta f t}$$

$a_{k,l}^{(p,\mu)}$ is a value on a resource element (resource element, RE) with a frequency domain number k, a time domain number $l$, antenna port is p, and a subcarrier spacing configuration $\mu$, and carries communication data or a reference signal sequence. It should be noted that, a value of an RE or a subcarrier with a number k of the communication signal is $a_{k,l}^{(p,\mu)}$; $N_{\text{grid},x}^{\text{size},\mu}$ represents a size of a resource grid; $N_{\text{sc}}^{\text{RB}}$ represents a quantity of REs included in each resource block; $\Delta f$ represents a subcarrier spacing; j represents an imaginary unit; t represents time; and e represents a natural constant, is a base of a natural logarithmic function, and a value of e is approximately 2.718281828459045.

However, a communication signal in the 5G communication system is specially designed for communication. When the signal is used as an integrated sensing and communication signal, sensing performance of the signal may not satisfy sensing requirements in different sensing scenarios. For example, in some sensing scenarios, higher ranging precision of sensing is required; in other sensing scenarios, higher false alarm performance of sensing is required. To resolve the foregoing technical problem, embodiments of this application provide the following solutions.

FIG. 2 is a schematic flowchart of a communication method according to an embodiment of this application. The method includes but is not limited to the following steps.

S201: A first network device generates a first signal based on a first sequence, where the first sequence is a product of a second sequence and a third sequence.

The second sequence includes N second elements, and any two of the N second elements may be the same or may be different. The second sequence carries data, or an element in the second sequence carries data. The data may be communication data or a communication reference sequence that needs to be sent by the first network device to a terminal device. For example, the first network device may convert a medium access control (medium access control, MAC) layer transport block (including bit data of 0 and 1) into the second sequence. The conversion processing includes at least one of the following processes: channel coding, rate matching, scrambling, constellation mapping, discrete Fourier transform (discrete Fourier transform, DFT) precoding (optional), and multi-antenna precoding. Each element in the second sequence is a complex number, including a real part and an imaginary part.

The second sequence may be associated with/correspond to a frequency domain resource, or the second sequence may be associated with/correspond to a time domain resource. For example, the second sequence corresponds to a first frequency domain resource of a symbol/code element. The second sequence is associated with the first frequency domain resource, and the first frequency domain resource includes N subcarriers (or N REs). Further, that the ith element in the second sequence is associated with the ith subcarrier in the first frequency domain resource may be understood as follows: The ith element in the second sequence corresponds to the ith subcarrier in the first frequency domain resource, or the ith element in the second sequence is a value carried on the ith subcarrier in the N subcarriers in the first frequency domain resource before the second sequence is multiplied by the third sequence. N is an integer greater than 1, and i is an integer greater than or equal to 1 and less than or equal to N.

For example, a first time domain resource is an orthogonal frequency division multiplexing (orthogonal frequency division multiplexing, OFDM) symbol, and is denoted as an OFDM symbol $l$. There are a plurality of REs or subcarriers in one OFDM symbol, and the plurality of REs or subcarriers are the first frequency domain resource. An element with a number i in the second sequence is associated with an RE or a subcarrier with a time domain number $l$ and a frequency domain number i.

The third sequence does not carry data, or an element in the third sequence does not carry data. The third sequence includes N third elements greater than or equal to 0, and any two of the N third elements may be the same or may be different. The ith element in the third sequence corresponds to the ith subcarrier in the first frequency domain resource. The third sequence may be understood as a window sequence, and the first sequence may be obtained by windowing the second sequence with the third sequence. Windowing means multiplying the sequences by elements.

Optionally, the ith element in the third sequence is equal to the (N-i+1)th element in the third sequence. In other words, the third sequence may be a sequence in a symmetric form. For example, the 1st element is equal to the Nth

element, the 2nd element is equal to the (N-1)th element, ....

In this embodiment of this application, the first frequency domain resource includes M non-overlapping frequency domain subresources. Optionally, each frequency domain subresource includes one or more consecutive subcarriers (or one or more REs). The third sequence includes M subsequences, the $t^{th}$ subsequence in the M subsequences corresponds to the $t^{th}$ frequency domain subresource in the M frequency domain subresources, and the $t^{th}$ subsequence in the M subsequences satisfies the $t_{th}$ relationship in M relationships. It can be learned that the third sequence is a sequence in a segmented form, and each subsequence is associated with one frequency domain subresource. M is an integer greater than or equal to 2 and less than or equal to N, and t is an integer greater than or equal to 1 and less than or equal to M. For example, M=3, the first frequency domain resource includes three non-overlapping frequency domain subresources, and the third sequence includes three subsequences. The 1st subsequence in the three subsequences corresponds to the 1st frequency domain subresource in the three frequency domain subresources, and elements in the 1st subsequence satisfy a relationship 1. The 2nd subsequence in the three subsequences corresponds to the 2nd frequency domain subresource in the three frequency domain subresources, and elements in the 2nd subsequence satisfy a relationship 2. The 3rd subsequence in the three subsequences corresponds to the 3rd frequency domain subresource in the three frequency domain subresources, and elements in the 3rd subsequence satisfy a relationship 3. M=4 or another value. This is similar, and details are not described herein again. Different segmented forms of the third sequence are designed, so that the first signal generated based on the first sequence can satisfy sensing performance requirements of different sensing scenarios.

It should be noted that the "relationship" in the $t^{th}$ relationship that the $t^{th}$ subsequence satisfies in the M relationships may be understood as a functional relationship, a mapping relationship, or the like. For example, an element in the $t^{th}$ subsequence and a number of the element in the $t^{th}$ subsequence satisfy a functional relationship. w[i] is the third sequence, and the third sequence includes three subsequences. The 1st subsequence is elements with numbers 0 to $N_1$ - 1 in the third sequence, and an element in the 1st subsequence and a number of the element in the 1st subsequence satisfy a functional relationship $h_1$. The 2nd subsequence is elements with numbers $N_1$ to $N_2$ - 1 in the third sequence, and an element in the 2nd subsequence and a number of the element in the 2nd subsequence satisfy a functional relationship $h_2$. The 3rd subsequence is elements with numbers $N_2$ to N - 1 in the third sequence, and an element in the 3rd subsequence and a number of the element in the 3rd subsequence satisfy a functional relationship $h_3$:

$$\mathrm{w[i]} = \begin{cases} h_1[i] & 0 \le i < N_1 \\ h_2[i] & N_1 \le i < N_2 \\ h_3[i] & N_2 \le i < N \end{cases}$$

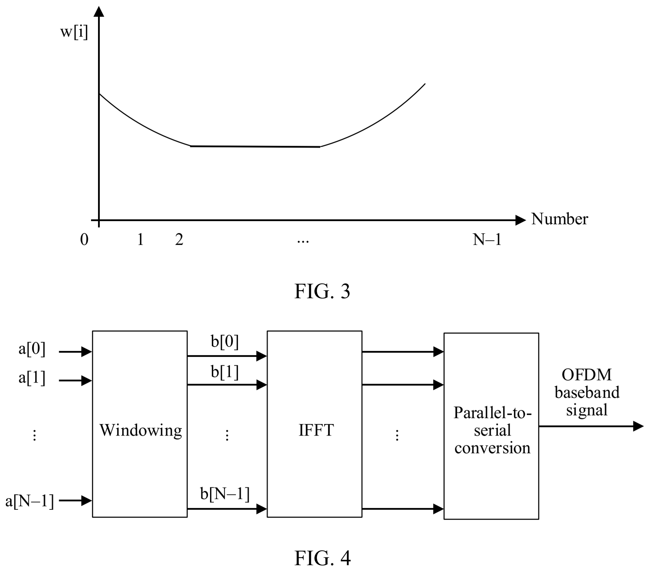

Particularly, the $k^{th}$ element in the third sequence is less than or equal to a larger value in the $k1^{th}$ element in the third sequence and the $k2^{th}$ element in the third sequence, where k, k1, and k2 are all integers greater than or equal to 1 and less than or equal to N, k2 is greater than k1, and k is greater than or equal to k1 and less than or equal to k2. FIG. 3 is a diagram of a third sequence according to this application. Under a condition that the $k^{th}$ element is less than or equal to a larger value in the $k1^{th}$ element in the third sequence and the $k2^{th}$ element in the third sequence, the third sequence w[i] is a sequence in a concave shape. The first sequence is obtained by windowing the second sequence with the third sequence in the concave shape, so that ranging precision of sensing can be improved.

The first sequence includes N first elements, and any two of the N first elements may be the same or may be different. "The first sequence is a product of the second sequence and the third sequence" means that the $i^{th}$ element in the first sequence is equal to a product of the $i^{th}$ element in the second sequence and the $i^{th}$ element in the third sequence. The $i^{th}$ element in the first sequence is carried on the $i^{th}$ subcarrier in the first frequency domain resource.

It should be noted that, because the $i^{th}$ element in the second sequence corresponds to the $i^{th}$ subcarrier in the first frequency domain resource, and the $i^{th}$ element in the first sequence is a product of the $i^{th}$ element in the second sequence and the $i^{th}$ element in the third sequence, it may be considered that the $i^{th}$ element in the third sequence corresponds to the $i^{th}$ subcarrier in the first frequency domain resource, and the $i^{th}$ element in the first sequence corresponds to the $i^{th}$ subcarrier in the first frequency domain resource. In addition, to ensure that power of the first sequence is equal to power of the second sequence, a sum of squares of all elements in the third sequence is equal to N.

Specifically, after multiplying the $i^{th}$ element in the second sequence by the $i^{th}$ element in the third sequence to obtain the first sequence, the first network device may map the first sequence to the first frequency domain resource. Further, the $i^{th}$ element in the first sequence may be mapped to the $i^{th}$ subcarrier in the first frequency domain resource. For example, if the first time domain resource is an OFDM symbol with a number *l,* and is denoted as an OFDM symbol *l,* mapping the $i^{th}$ element in the first sequence to the $i^{th}$ subcarrier in the first frequency domain resource may be understood as follows: An element with a number i in the first sequence is mapped to a resource element with a time domain number *l* and a frequency domain number i, or an element with a number i in the first sequence is carried on a resource element with a time domain number l and a frequency domain number i, or a value on a resource element with a time domain number l

and a frequency domain number i is an element with a number i in the first sequence. Then, an OFDM baseband signal is generated based on the first sequence mapped to the first frequency domain resource. An expression of the OFDM baseband signal is:

$$s(t) = \sum_{z=0}^{N_{\text{grid},x}^{\text{size},\mu} N_{\text{sc}}^{\text{RB}} - 1} b[z] e^{j2\pi\left(z - N_{\text{grid},x}^{\text{size},\mu} N_{\text{sc}}^{\text{RB}}/2\right)\Delta f t}$$

$s(t)$ is the OFDM baseband signal, b[z] represents an element with a number z in the first sequence, and $N_{\text{grid},x}^{\text{size},\mu} N_{\text{sc}}^{\text{RB}}$ is a quantity of subcarriers included in the first frequency domain resource. $\Delta f$ represents a subcarrier spacing, j represents an imaginary unit, t represents time, e represents a natural constant and is a base of a natural logarithmic function, and a value of e is approximately 2.718281828459045.

Finally, the first network device may perform processing such as up-conversion on the OFDM baseband signal, to generate the first signal. The first signal may be an integrated sensing and communication signal or a sensing signal depending on whether the first sequence carries data.

Optionally, the second sequence may not carry data, or an element in the second sequence does not carry data. When the second sequence carries data or an element in the second sequence carries data, the first sequence also carries data or an element in the first sequence also carries data. In this case, the first signal is an integrated sensing and communication signal. When the second sequence does not carry data or an element in the second sequence does not carry data, the first sequence does not carry data or an element in the first sequence does not carry data. In this case, the first signal is a sensing signal.

For example, FIG. 4 is a diagram of a sequence processing process according to an embodiment of this application. An element with a number i in the second sequence is denoted as a[i], an element with a number i in the first sequence is denoted as b[i], and an element with a number i in the third sequence is denoted as w[i]. First, the first sequence b[0], b[1], ..., b[N-1] is obtained by windowing the second sequence a[0], a[1], ..., a[N-1] with the third sequence. That is, the element with the number i in the second sequence is multiplied by the element with the number i in the third sequence, to obtain the element with the number i in the first sequence. The element with the number i in the first sequence may be represented as b[i]=a[i] × w[i]. Then, inverse fast Fourier transform (inverse fast Fourier transform, IFFT) is performed on the first sequence b[0], b[1], ..., b[N-1], and parallel-to-serial conversion is performed on the first sequence obtained by inverse fast Fourier transform, to obtain an OFDM baseband signal. Windowing may also be referred to as frequency domain filtering. It should be noted that, if the process of generating the second sequence includes DFT precoding, the OFDM baseband signal may also be a discrete Fourier transform spread orthogonal frequency division multiplexing (discrete Fourier transform spread orthogonal frequency division multiplexing, DFT-s-OFDM) baseband signal. Finally, the first signal is generated based on the OFDM baseband signal, and the first signal is sent through an antenna.

The following specifically describes several forms of the third sequence.

In this application document, the first frequency domain resource includes the M non-overlapping frequency domain subresources, and each frequency domain subresource includes one or more subcarriers. The third sequence includes the M subsequences, and each subsequence includes one or more elements. The t[th] subsequence in the M subsequences corresponds to the t[th] frequency domain subresource in the M frequency domain subresources, and the t[th] subsequence in the M subsequences satisfies the t[th] relationship in the M relationships. A start frequency of the t1[th] frequency domain subresource in the M frequency domain subresources is less than a start frequency of the t2[th] frequency domain subresource in the M frequency domain subresources, t1 is an integer greater than or equal to 1 and less than M, t2 is an integer greater than 1 and less than or equal to M, and t1 is less than t2.

Optionally, values of elements in at least one of the M subsequences included in the third sequence are all the same. That is, the values of the elements in the at least one subsequence are constant.

When M=3, the first frequency domain resource includes the 1st frequency domain subresource, the 2nd frequency domain subresource, and the 3rd frequency domain subresource. The 1st frequency domain subresource is the 1st subcarrier to the $f_1$[th] subcarrier in the first frequency domain resource, the 2nd frequency domain subresource is the $f_1$ + 1th subcarrier to the $f_2$[th] subcarrier in the first frequency domain resource, and the 3rd frequency domain subresource is the $f_2$ + 1th subcarrier to the Nth subcarrier in the first frequency domain resource. $f_1$ and $f_2$ are both integers greater than or equal to 1 and less than N, and $f_1$ is less than $f_2$. It can be learned that a start frequency of the 1st frequency domain subresource is a frequency corresponding to the 1st subcarrier, a start frequency of the 2nd frequency domain subresource is a frequency corresponding to the $f_1$ + 1th subcarrier, and a start frequency of the 3rd frequency domain subresource is a frequency corresponding to the $f_2$ + 1th subcarrier. Therefore, the start frequency of the 1st frequency domain subresource is less than the start frequency of the 2nd frequency domain subresource, and the start frequency of the 2nd frequency domain subresource is less than the start frequency of the 3rd frequency domain subresource. In addition, the 1st subsequence in the M subsequences corresponds to the 1st frequency domain subresource in the M frequency domain subresources, the 2nd subsequence in the M subsequences corresponds to the 2nd frequency domain subresource in the M frequency domain subresources, and the 3rd subsequence in the M subsequences corresponds to the 3rd frequency domain subresource in the M frequency domain subresources. Specifically, when M=3, the third sequence may include the following forms:

In an optional manner, the 1st subsequence in the M subsequences satisfies the 1st relationship in the M relationships, and the 1st relationship is: values of elements in the 1st subsequence are all first values. The 2nd subsequence in the M subsequences satisfies the 2nd relationship in the M relationships, and the 2nd relationship is: values of elements in the 2nd subsequence are all second values. The 3rd subsequence in the M subsequences satisfies the 3rd relationship in the M relationships, and the 3rd relationship is: values of elements in the 3rd subsequence are all third values.

Optionally, the first value and the third value are both greater than the second value.

Optionally, a value obtained by dividing a quantity of subcarriers included in the 1st frequency domain subresource by a quantity N of all subcarriers included in the first frequency domain resource is less than 0.25; a value obtained by dividing a quantity of subcarriers included in the 3rd frequency domain subresource by the quantity N of all subcarriers included in the first frequency domain resource is less than 0.25; or a value obtained by dividing a sum of quantities of subcarriers included in the 1st frequency domain subresource and the 3rd frequency domain subresource by the quantity N of all subcarriers included in the first frequency domain resource is less than 0.5.

Optionally, the first value is equal to the third value.

Optionally, the quantity of subcarriers included in the 1st frequency domain subresource is equal to the quantity of subcarriers included in the 3rd frequency domain subresource.

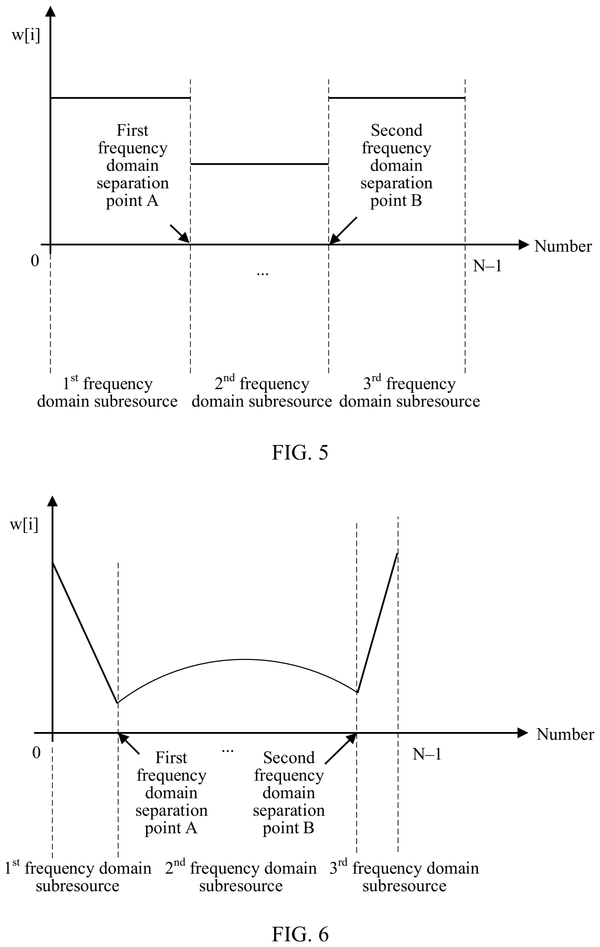

For example, FIG. 5 is a diagram of a third sequence according to an embodiment of this application. The first frequency domain resource is divided into three consecutive frequency domain subresources by a first frequency domain separation point A and a second frequency domain separation point B. The first frequency domain separation point A and the second frequency domain separation point B may be represented by subcarrier numbers, resource block (resource block, RB) numbers, or resource block group (resource block group, RBG) numbers. This is not limited in this application. The first frequency domain separation point A is less than the second frequency domain separation point B. A part with numbers less than the first frequency domain separation point A in the first frequency domain resource is referred to as the 1st frequency domain subresource. A part with numbers greater than or equal to the first frequency domain separation point A and less than or equal to the second frequency domain separation point B in the first frequency domain resource is referred to as the 2nd frequency domain subresource. A part with numbers greater than the second frequency domain separation point B in the first frequency domain resource is referred to as the 3rd frequency domain subresource. The 1st subsequence corresponds to the 1st frequency domain subresource, the 1st subsequence satisfies the 1st relationship, and the 1st relationship is: values of elements in the 1st subsequence are all first values. The 2nd subsequence corresponds to the 2nd frequency domain subresource, the 2nd subsequence satisfies the 2nd relationship, and the 2nd relationship is: values of elements in the 2nd subsequence are all second values. The 3rd subsequence corresponds to the 3rd frequency domain subresource, the 3rd subsequence satisfies the 3rd relationship, and the 3rd relationship is: values of elements in the 3rd subsequence are all third values. The following describes the first value, the second value, and the third value by using examples.

The first value and the third value may both be equal to $\sqrt{2}$, and the second value may be equal to 0.4082. The first frequency domain resource includes 792 subcarriers. The 1st frequency domain subresource includes subcarriers with numbers 0 to 179. That is, the 1st frequency domain subresource includes 180 subcarriers. The 2nd frequency domain subresource includes subcarriers with numbers 180 to 611. That is, the 2nd frequency domain subresource includes 432 subcarriers. The 3rd frequency domain subresource includes subcarriers with numbers 612 to 791. That is, the 3rd frequency domain subresource includes 180 subcarriers. It may be verified that a quantity of subcarriers included in the 1st frequency domain subresource is 180, and a value obtained by dividing the quantity 180 of subcarriers included in the 1st frequency domain subresource by the quantity 792 of subcarriers included in the first frequency domain resource is approximately 0.227, and is less than 0.25.

Alternatively, the first value and the third value may both be equal to 2, the second value may be equal to 0.577, and the first frequency domain resource includes 792 subcarriers. The 1st frequency domain subresource includes subcarriers with numbers 0 to 71. That is, the 1st frequency domain subresource includes 72 subcarriers. The 2nd frequency domain subresource includes subcarriers with numbers 72 to 719. That is, the 2nd frequency domain subresource includes 648 subcarriers. The 3rd frequency domain subresource includes subcarriers with numbers 720 to 791. That is, the 3rd frequency domain subresource includes 72 subcarriers. It may be verified that a quantity of subcarriers included in the 1st frequency domain subresource is 72, and a value obtained by dividing the quantity 72 of subcarriers included in the 1st frequency domain subresource by the quantity 792 of subcarriers included in the first frequency domain resource is approximately 0.091, and is less than 0.25.

Alternatively, the first value and the third value may both be equal to $\sqrt{10}$, the second value may be equal to 0.6476, and the first frequency domain resource includes 792 subcarriers. The 1st frequency domain subresource includes subcarriers with numbers 0 to 23. That is, the 1st frequency domain subresource includes 24 subcarriers. The 2nd frequency domain subresource includes subcarriers with numbers 24 to 767. That is, the 2nd frequency domain subresource includes 744 subcarriers. The 3rd frequency domain subresource includes subcarriers with numbers 768 to 791. That is, the 3rd frequency domain subresource includes 24 subcarriers. It may be verified that a quantity of subcarriers included in the 1st frequency domain subresource is 24, and a value obtained by dividing the quantity 24 of subcarriers included in the 1st frequency domain subresource by the quantity 792 of subcarriers included in the first frequency domain resource is approximately 0.030, and is less than 0.25.

In another implementation, the 1st subsequence in the M subsequences satisfies the 1st relationship in the M relationships, and the 1st relationship is: the k1th element in the 1st subsequence is greater than or equal to the k2th element in the 1st subsequence. The 2nd subsequence in the M subsequences satisfies the 2nd relationship in the M relationships, and the 2nd relationship is: the kth element in the 2nd subsequence is greater than or equal to a smaller value in the k1th element in the 2nd subsequence and the k2th element in the 2nd subsequence. The 3rd subsequence in the M subsequences satisfies the 3rd relationship in the M relationships, and the 3rd relationship is: the k1th element in the 3rd subsequence is less than or equal to the k2th elements in the 3rd subsequence, where k, k1, and k2 are all integers greater than or equal to 1 and less than or equal to N, k2 is greater than k1, and k is greater than or equal to k1 and less than or equal to k2. It can be learned that the 1st subsequence is a monotonically decreasing sequence, the 2nd subsequence is a sequence in a convex form, and the 3rd subsequence is a monotonically increasing sequence.

Optionally, a quantity of subcarriers included in the 1st frequency domain subresource is equal to a quantity of subcarriers included in the 3rd frequency domain subresource.

For example, FIG. 6 is a diagram of another third sequence according to an embodiment of this application. The first frequency domain resource is divided into three consecutive frequency domain subresources by a first frequency domain separation point A and a second frequency domain separation point B. The first frequency domain separation point A and the second frequency domain separation point B may be represented by subcarrier numbers, resource block (resource block, RB) numbers, or resource block group (resource block group, RBG) numbers. This is not limited in this application. The first frequency domain separation point A is less than the second frequency domain separation point B. A part with numbers less than the first frequency domain separation point A in the first frequency domain resource is referred to as the 1st frequency domain subresource. A part with numbers greater than or equal to the first frequency domain separation point A and less than or equal to the second frequency domain separation point B in the first frequency domain resource is referred to as the 2nd frequency domain subresource. A part with numbers greater than the second frequency domain separation point B in the first frequency domain resource is referred to as the 3rd frequency domain subresource. The 1st subsequence is associated with the 1st frequency domain subresource, and the 1st subsequence is a monotonically decreasing sequence. The 2nd subsequence is associated with the 2nd frequency domain subresource, and the 2nd subsequence is a sequence in a convex form. The 3rd subsequence is associated with the 3rd frequency domain subresource, and the 3rd subsequence is a monotonically increasing sequence.

In another implementation, the 1st subsequence in the M subsequences satisfies the 1st relationship in the M relationships, and the 1st relationship is: values of elements in the 1st subsequence are all first values. The 2nd subsequence in the M subsequences satisfies the 2nd relationship in the M relationships, the 2nd relationship is: a value of an element in the 2nd subsequence satisfies a polynomial function of a square of $(k-(N-1)/2)$, and k is a sequence number, in the third sequence, of an element in the 3rd subsequence. The 3rd subsequence in the M subsequences satisfies the 3rd relationship in the M relationships, and the 3rd relationship is: values of elements in the 3rd subsequence are all third values.

The polynomial function may be represented as $y = a_0 + a_1 x + a_2 x^2 + ... + a_n x^n$. $a_0, a_1, a_2, ..., a_n$ is a constant, $x$ is an independent variable, and $y$ is a dependent variable. That "the value of the element in the 2nd subsequence satisfies a polynomial function of a square of $(k-(N-1)/2)$" means that a square of $(k-(N-1)/2)$ is substituted into x, and a value of an element with a sequence number k is $y = a_0 + a_1(k-(N-1)/2)^2 + a_2(k-(N-1)/2)^4 + ... + a_n(k-(N-1)/2)^{2n}$.

Optionally, the first value is equal to the third value.

Optionally, a quantity of subcarriers included in the 1st frequency domain subresource is equal to a quantity of subcarriers included in the 3rd frequency domain subresource.

Optionally, an element with a sequence number i in the third sequence is equal to an element with a sequence number N-i-1. For example, when N=9, the 1st subsequence includes an element with a sequence number 0, an element with a sequence number 1, and an element with a sequence number 2 in the third sequence. The 2nd subsequence includes an element with a sequence number 3, an element with a sequence number 4, and an element with a sequence number 5 in the third sequence. The 3rd subsequence includes an element with a sequence number 6, an element with a sequence number 7, and an element with a sequence number 8 in the third sequence. All elements in the 1st subsequence are 1, and all elements in the 3rd subsequence are 1. The element with the sequence number 0 is the same as the element with the sequence number 8, the element with the sequence number 1 is the same as the element with the sequence number 7, and the element with the sequence number 2 is the same as the element with the sequence number 6. The element with the sequence number 3 satisfies (3-(9-1)/2)=-1, and the element with the sequence number 5 satisfies (5-(9-1)/2)=1. Values calculated by using a polynomial function of squares of the two elements are the same. It can be learned that the third sequence is a sequence in a symmetric form.

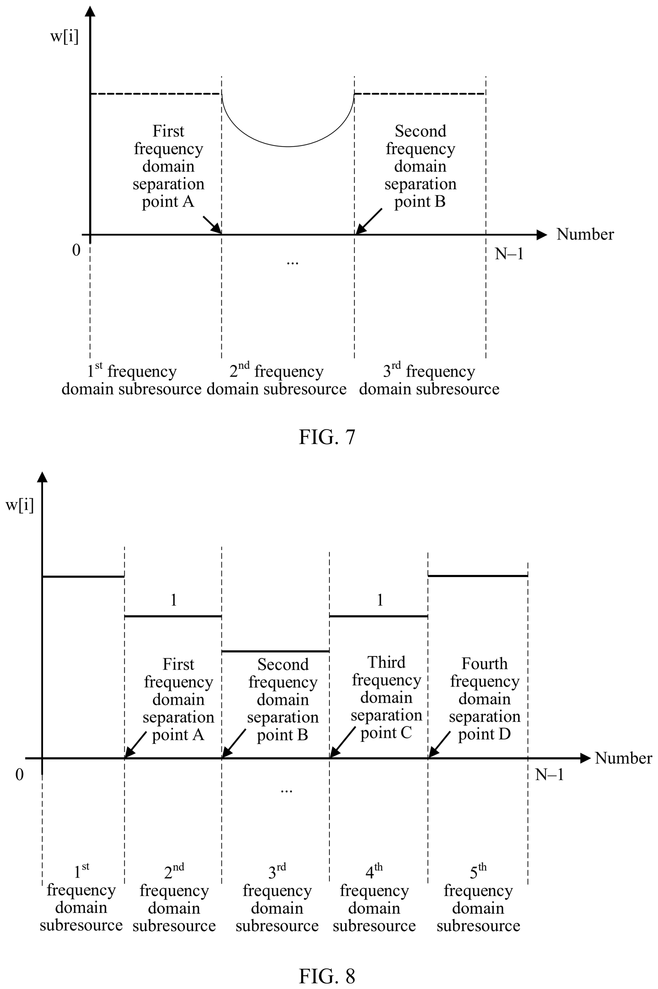

For example, FIG. 7 is a diagram of another third sequence according to an embodiment of this application. The first frequency domain resource is divided into three consecutive frequency domain subresources by a first frequency domain separation point A and a second frequency domain separation point B. The first frequency domain separation point A and the second frequency domain separation point B may be represented by subcarrier numbers, RB numbers, or RBG numbers. This is not limited in this application. The first frequency domain separation point A is less than the second frequency domain separation point B. A part with numbers less than the first frequency domain separation point A in the first frequency domain resource is referred to as the 1st frequency domain subresource. A part with numbers greater than or equal to the first frequency domain separation point A and less than or equal to the second frequency domain separation point B in the first frequency domain resource is referred to as the 2nd frequency domain subresource. A part with numbers greater than the second frequency domain separation point B in the first frequency domain resource is referred to as the 3rd frequency domain subresource. The 1st subsequence corresponds to the 1st frequency domain subresource, the 1st subsequence satisfies the 1st relationship, and the 1st relationship is: values of elements in the 1st subsequence are all first values. The 2nd subsequence corresponds to the 2nd frequency domain subresource, the 2nd subsequence satisfies the 2nd relationship, and the 2nd relationship is: a value of an element in the 2nd subsequence satisfies a polynomial function of a square of ($k$-($N$-1)/2). The 3rd subsequence corresponds to the 3rd frequency domain subresource, the 3rd subsequence satisfies the 3rd relationship, and the 3rd relationship is: values of elements in the 3rd subsequence are all third values.

The polynomial function of the square of ($k$-($N$-1)/2) is a functional relationship

$$d_0 + d_1 * (k - \frac{N-1}{2})^2 + d_2 * (k - \frac{N-1}{2})^4$$ , a value of an element in the 2nd subsequence satisfies the functional relationship $$d_0 + d_1 * (k - \frac{N-1}{2})^2 + d_2 * (k - \frac{N-1}{2})^4$$ , and k is a sequence number, in the third sequence, of an

element in the 2nd subsequence. That is, for an element with a sequence number k in the third sequence, the element is in

the 2nd subsequence, and a value of the element is $$d_0 + d_1 * (k - \frac{N-1}{2})^2 + d_2 * (k - \frac{N-1}{2})^4$$ , where d0, d1, or d2 is a parameter, d0 is greater than 0, d1 is greater than or equal to 0, and d2 is greater than 0. For example, values of the parameters in the functional relationship are: d0=0.545, d1=912.20, and d2=339.93. Alternatively, d0=0.545, d1=1164.52, and d2=820.97. Alternatively, d0=0.545, d1=1416.84, and d2=1302.00.

It should be noted that a value of the first frequency domain separation point may be 0 (a subcarrier number), and a value of the second frequency domain separation point may be N-1 (a subcarrier number). In this case, the 1st frequency domain subresource and the 3rd frequency domain subresource are empty sets, and the third sequence is determined only by using the foregoing polynomial function.

In still another implementation, the first frequency domain resource is divided into three consecutive frequency domain subresources by a first frequency domain separation point A and a second frequency domain separation point B. The first frequency domain separation point A and the second frequency domain separation point B may be represented by subcarrier numbers, RB numbers, or RBG numbers. This is not limited in this application. The first frequency domain separation point A is less than the second frequency domain separation point B. A part with numbers less than the first frequency domain separation point A in the first frequency domain resource is referred to as the 1st frequency domain subresource. A part with numbers greater than or equal to the first frequency domain separation point A and less than or equal to the second frequency domain separation point B in the first frequency domain resource is referred to as the 2nd frequency domain subresource. A part with numbers greater than the second frequency domain separation point B in the first frequency domain resource is referred to as the 3rd frequency domain subresource.

The 1st subsequence corresponds to the 1st frequency domain subresource, the 1st subsequence in the M subsequences satisfies the 1st relationship in the M relationships, and the 1st relationship is: values of elements in the 1st subsequence are all first values. The 2nd subsequence corresponds to the 2nd frequency domain subresource, the 2nd subsequence in the M subsequences satisfies the 2nd relationship in the M relationships, and the 2nd relationship is: a

value of an element in the 2nd subsequence satisfies a functional relationship $$\sqrt{\frac{1}{\mu(k - \frac{N-1}{2})^2 + v} + s}$$ , where k is a sequence number, in the third sequence, of an element in the 2nd subsequence, $\mu$, v, s are all parameters, $\mu$ is less than 0, v is greater than 0, s is greater than 0, and $\left|\dfrac{12v}{\mu(N-1)N(N+1)}\right| > 0.5$ . The 3rd subsequence corresponds to the 3rd

frequency domain subresource, the 3rd subsequence in the M subsequences satisfies the 3rd relationship in the M relationships, and the 3rd relationship is: values of elements in the 3rd subsequence are all third values.

Optionally, the first value is equal to the third value.

Optionally, a quantity of subcarriers included in the 1st frequency domain subresource is equal to a quantity of subcarriers included in the 3rd frequency domain subresource.

It should be noted that a value of the first frequency domain separation point may be 0 (a subcarrier number), and a value of the second frequency domain separation point may be N-1 (a subcarrier number). In this case, the 1st frequency domain subresource and the 3rd frequency domain subresource are empty sets, and the third sequence is determined only by using the foregoing functional relationship.

When M=5, the first frequency domain resource includes the 1st frequency domain subresource, the 2nd frequency domain subresource, the 3rd frequency domain subresource, the 4th frequency domain subresource, and the 5th frequency domain subresource. The 1st frequency domain subresource is the 1st subcarrier to the $f_1$ th subcarrier in the first frequency domain resource, the 2nd frequency domain subresource is the $f_1 + 1$ th subcarrier to the $f_2$ th subcarrier in the first frequency domain resource, the 3rd frequency domain subresource is the $f_2 + 1$ th subcarrier to the $f_3$ th subcarrier in the first frequency domain resource, the 4th frequency domain subresource is the $f_3 + 1$ th subcarrier to the $f_4$ th subcarrier in the first frequency domain resource, and the 5th frequency domain subresource is the $f_4 + 1$ th subcarrier to the Nth subcarrier in the first frequency domain resource. $f_1$, $f_2$, $f_3$, and $f_4$ are all integers greater than or equal to 1 and less than N, $f_1$ is less than $f_2$, $f_2$ is less than $f_3$, and $f_3$ is less than $f_4$. It can be learned that a start frequency of the 1st frequency domain subresource is a frequency corresponding to the 1st subcarrier, a start frequency of the 2nd frequency domain subresource is a frequency corresponding to the $f_1 + 1$ th subcarrier, a start frequency of the 3rd frequency domain subresource is a frequency corresponding to the $f_2 + 1$ th subcarrier, a start frequency of the 4th frequency domain subresource is a frequency corresponding to the $f_3 + 1$ th subcarrier, and a start frequency of the 5th frequency domain subresource is a frequency corresponding to the $f_4 + 1$ th subcarrier. Therefore, the start frequency of the 1st frequency domain subresource is less than the start frequency of the 2nd frequency domain subresource, the start frequency of the 2nd frequency domain subresource is less than the start frequency of the 3rd frequency domain subresource, the start frequency of the 3rd frequency domain subresource is less than the start frequency of the 4th frequency domain subresource, and the start frequency of the 4th frequency domain subresource is less than the start frequency of the 5th frequency domain subresource.

In addition, the 1st subsequence in the M subsequences corresponds to the 1st frequency domain subresource in the M frequency domain subresources, the 2nd subsequence in the M subsequences corresponds to the 2nd frequency domain subresource in the M frequency domain subresources, the 3rd subsequence in the M subsequences corresponds to the 3rd frequency domain subresource in the M frequency domain subresources, the 4th subsequence in the M subsequences corresponds to the 4th frequency domain subresource in the M frequency domain subresources, and the 5th subsequence in the M subsequences corresponds to the 5th frequency domain subresource in the M frequency domain subresources. Specifically, when M=5, the third sequence may include the following forms:

In an implementation, the 1st subsequence in the M subsequences satisfies the 1st relationship in the M relationships, and the 1st relationship is: values of elements in the 1st subsequence are all first values. The 2nd subsequence in the M subsequences satisfies the 2nd relationship in the M relationships, and the 2nd relationship is: values of elements in the 2nd subsequence are all 1s. The 3rd subsequence in the M subsequences satisfies the 3rd relationship in the M relationships, and the 3rd relationship is: values of elements in the 3rd subsequence are all second values. The 4th subsequence in the M subsequences satisfies the 4th relationship in the M relationships, and the 4th relationship is: values of elements in the 4th subsequence are all 1s. The 5th subsequence in the M subsequences satisfies the 5th relationship in the M relationships, and the 5th relationship is: values of elements in the 5th subsequence are all third values.

Optionally, the first value and the third value are both greater than 1, and the second value is greater than 0 and less than or equal to 1.

Optionally, the first value is equal to the third value.

Optionally, a quantity of subcarriers included in the 1st frequency domain subresource is equal to a quantity of subcarriers included in the 5th frequency domain subresource, and/or a quantity of subcarriers included in the 2nd frequency domain subresource is equal to a quantity of subcarriers included in the 4th frequency domain subresource.

For example, FIG. 8 is a diagram of another third sequence according to an embodiment of this application. The first frequency domain resource is divided into five consecutive frequency domain subresources by a first frequency domain separation point A, a second frequency domain separation point B, a third frequency domain separation point C, and a fourth frequency domain separation point D. The frequency domain separation point may be represented by a subcarrier number, an RB number, or an RBG number. This is not limited in this application. The first frequency domain separation point A is less than the second frequency domain separation point B, the second frequency domain separation point B is less than the third frequency domain separation point C, and the third frequency domain separation point C is less than the fourth frequency domain separation point D. A part with numbers less than the first frequency domain separation point A in the first frequency domain resource is referred to as the 1st frequency domain subresource. A part with numbers greater than or equal to the first frequency domain separation point A and less than the second frequency domain separation point B in the first frequency domain resource is referred to as the 2nd frequency domain subresource. A part with numbers greater than or equal to the second frequency domain separation point B and less than the third frequency domain separation point C in the first frequency domain resource is referred to as the 3rd frequency domain subresource. A part with numbers greater than or equal to the third frequency domain separation point C and less than the fourth frequency domain separation point D in the first frequency domain resource is referred to as the 4th frequency domain subresource. A part with numbers greater than or equal to the fourth frequency domain separation point D in the first frequency domain resource is referred to as the 5th frequency domain subresource.

The 1st subsequence corresponds to the 1st frequency domain subresource, the 1st subsequence in the M subsequences satisfies the 1st relationship in the M relationships, and the 1st relationship is: values of elements in the 1st subsequence are all first values. The 2nd subsequence corresponds to the 2nd frequency domain subresource, the 2nd subsequence in the M subsequences satisfies the 2nd relationship in the M relationships, and the 2nd relationship is: values of elements in the 2nd subsequence are all 1s. The 3rd subsequence corresponds to the 3rd frequency domain subresource, the 3rd subsequence in the M subsequences satisfies the 3rd relationship in the M relationships, and the 3rd relationship is: values of elements in the 1st subsequence are all second values. The 4th subsequence corresponds to the 4th frequency domain subresource, the 4th subsequence in the M subsequences satisfies the 4th relationship in the M relationships, and the 4th relationship is: values of elements in the 4th subsequence are all 1s. The 5th subsequence corresponds to the 5th frequency domain subresource, the 5th subsequence in the M subsequences satisfies the 5th relationship in the M relationships: values of elements in the 5th subsequence are all third values. The first value and the third value are both greater than 1, and the second value is less than 1.

In another implementation, the 1st subsequence in the M subsequences satisfies the 1st relationship in the M relationships, and the 1st relationship is: values of elements in the 1st subsequence are all first values. The 2nd subsequence in the M subsequences satisfies the 2nd relationship in the M relationships, and the 2nd relationship is: values of elements in the 2nd subsequence are all 1s. The 3rd subsequence in the M subsequences satisfies the 3rd relationship in the M relationships, and the 3rd relationship is: a value of an element in the 3rd subsequence satisfies a polynomial function of a square of $(k-(N-1)/2)$. For descriptions of the polynomial function, refer to the foregoing descriptions. k is a sequence number, in the third sequence, of an element in the 3rd subsequence. The 4th subsequence in the M subsequences satisfies the 4th relationship in the M relationships, and the 4th relationship is: values of elements in the 4th subsequence are all 1s. The 5th subsequence in the M subsequences satisfies the 5th relationship in the M relationships: values of elements in the 5th subsequence are all third values. The first value and the third value are both greater than 1.

Optionally, the first value is equal to the third value.

Optionally, a quantity of subcarriers included in the 1st frequency domain subresource is equal to a quantity of subcarriers included in the 5th frequency domain subresource, and/or a quantity of subcarriers included in the 2nd frequency domain subresource is equal to a quantity of subcarriers included in the 4th frequency domain subresource.

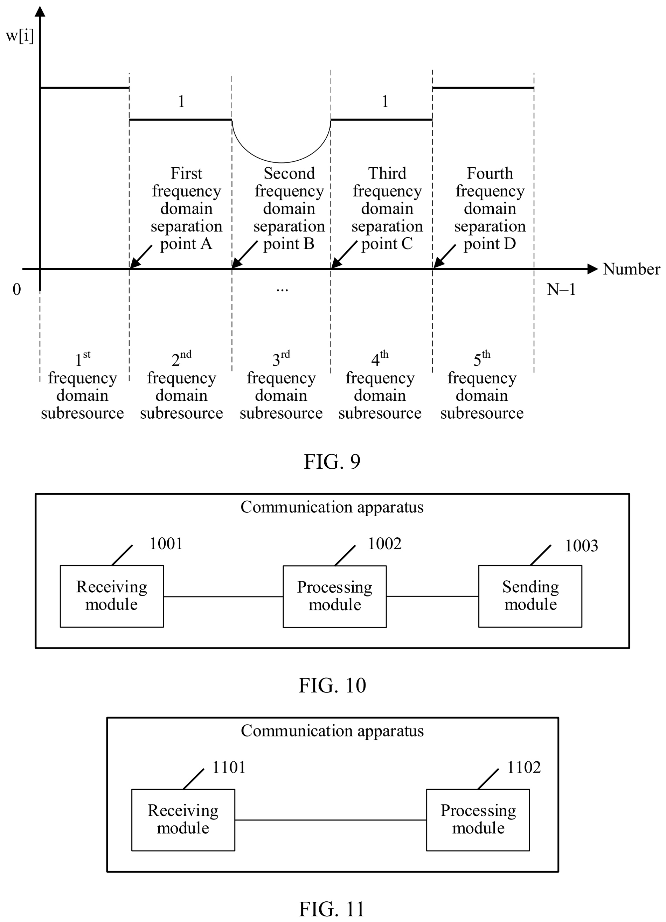

For example, FIG. 9 is a diagram of another third sequence according to an embodiment of this application. The first frequency domain resource is divided into five consecutive frequency domain subresources by a first frequency domain separation point A, a second frequency domain separation point B, a third frequency domain separation point C, and a fourth frequency domain separation point D. The frequency domain separation point may be represented by a subcarrier number, an RB number, or an RBG number. This is not limited in this application. The first frequency domain separation point A is less than the second frequency domain separation point B, the second frequency domain separation point B is less than the third frequency domain separation point C, and the third frequency domain separation point C is less than the fourth frequency domain separation point D. A part with numbers less than the first frequency domain separation point A in the first frequency domain resource is referred to as the 1st frequency domain subresource. A part with numbers greater than or equal to the first frequency domain separation point A and less than the second frequency domain separation point B in the first frequency domain resource is referred to as the 2nd frequency domain subresource. A part with numbers greater than or equal to the second frequency domain separation point B and less than the third frequency domain separation point C in the first frequency domain resource is referred to as the 3rd frequency domain subresource. A part with numbers greater than or equal to the third frequency domain separation point C and less than the fourth frequency domain separation point D in the first frequency domain resource is referred to as the 4th frequency domain subresource. A part with numbers greater than or equal to the fourth frequency domain separation point D in the first frequency domain resource is referred to as the 5th frequency domain subresource.

The 1st subsequence corresponds to the 1st frequency domain subresource, the 1st subsequence satisfies the 1st

relationship, and the 1st relationship is: values of elements in the 1st subsequence are all first values. The 2nd subsequence corresponds to the 2nd frequency domain subresource, the 2nd subsequence satisfies the 2nd relationship, and the 2nd relationship is: values of elements in the 1st subsequence are 1. The 3rd subsequence corresponds to the 3rd frequency domain subresource, the 3rd subsequence satisfies the 3rd relationship, and the 3rd relationship is: a value of an element in the 3rd subsequence satisfies a polynomial function of a square of (k-(N-1)/2). The 4th subsequence corresponds to the 4th frequency domain subresource, the 4th subsequence satisfies the 4th relationship, and the 4th relationship is: values of elements in the 4th subsequence are all 1s. The 5th subsequence corresponds to the 5th frequency domain subresource, the 5th subsequence satisfies the 5th relationship, and the 5th relationship is: values of elements in the 5th subsequence are all third values. The first value and the third value are both greater than 1.

The polynomial function of the square of (k-(N-1)/2) is a functional relationship

$$d_0 + d_1 * (k - \frac{N-1}{2})^2 + d_2 * (k - \frac{N-1}{2})^4$$ , a value of an element in the 3rd subsequence satisfies the functional relationship $d_0 + d_1 * (k - \frac{N-1}{2})^2 + d_2 * (k - \frac{N-1}{2})^4$ , and k is a sequence number, in the third sequence, of an

element in the 3rd subsequence. That is, for an element with a sequence number k in the third sequence, the element is in

the 2nd subsequence, and a value of the element is $d_0 + d_1 * (k - \frac{N-1}{2})^2 + d_2 * (k - \frac{N-1}{2})^4$ , where d0, d1, or d2 is a parameter, d0 is greater than 0, d1 is greater than or equal to 0, and d2 is greater than 0.

In another implementation, the first frequency domain resource is divided into five consecutive frequency domain subresources by a first frequency domain separation point A, a second frequency domain separation point B, a third frequency domain separation point C, and a fourth frequency domain separation point D. The frequency domain separation point may be represented by a subcarrier number, an RB number, or an RBG number. This is not limited in this application. The first frequency domain separation point A is less than the second frequency domain separation point B, the second frequency domain separation point B is less than the third frequency domain separation point C, and the third frequency domain separation point C is less than the fourth frequency domain separation point D. A part with numbers less than the first frequency domain separation point A in the first frequency domain resource is referred to as the 1st frequency domain subresource. A part with numbers greater than or equal to the first frequency domain separation point A and less than the second frequency domain separation point B in the first frequency domain resource is referred to as the 2nd frequency domain subresource. A part with numbers greater than or equal to the second frequency domain separation point B and less than the third frequency domain separation point C in the first frequency domain resource is referred to as the 3rd frequency domain subresource. A part with numbers greater than or equal to the third frequency domain separation point C and less than the fourth frequency domain separation point D in the first frequency domain resource is referred to as the 4th frequency domain subresource. A part with numbers greater than or equal to the fourth frequency domain separation point D in the first frequency domain resource is referred to as the 5th frequency domain subresource.

The 1st subsequence corresponds to the 1st frequency domain subresource, the 1st subsequence in the M subsequences satisfies the 1st relationship in the M relationships, and the 1st relationship is: values of elements in the 1st subsequence are all first values. The 2nd subsequence corresponds to the 2nd frequency domain subresource, the 2nd subsequence in the M subsequences satisfies the 2nd relationship in the M relationships, and the 2nd relationship is: values of elements in the 2nd subsequence are all 1s. The 3rd subsequence corresponds to the 3rd frequency domain subresource, the 3rd subsequence in the M subsequences satisfies the 3rd relationship in the M relationships, and the 3rd relationship is: a value of an element in the 3rd subsequence satisfies a functional relationship

$$\sqrt{\frac{1}{\mu(k - \frac{N-1}{2})^2 + v} + s}$$ , where $\left| \frac{12v}{\mu(N-1)N(N+1)} \right| > 0.5$ , k is a sequence number, in the third sequence, of an element in the 3rd subsequence, μ is less than 0, v is greater than 0, and s is greater than 0. The 4th subsequence corresponds to the 4th frequency domain subresource, the 4th subsequence in the M subsequences satisfies the 4th relationship in the M relationships, and the 4th relationship is: values of elements in the 4th subsequence are all 1s. The 5th subsequence corresponds to the 5th frequency domain subresource, the 5th subsequence in the M subsequences satisfies the 5th relationship in the M relationships: values of elements in the 5th subsequence are all third values. The first value and the third value are both greater than 1.

Optionally, the first value is equal to the third value.

Optionally, a quantity of subcarriers included in the 1st frequency domain subresource is equal to a quantity of subcarriers included in the 5th frequency domain subresource; and/or a quantity of subcarriers included in the 2nd

frequency domain subresource is equal to a quantity of subcarriers included in the 4<sup>th</sup> frequency domain subresource.

It should be noted that the quantity M of frequency domain subresources included in the first frequency domain resource or the quantity M of subsequences included in the third sequence may also be equal to another value. A case in which M is equal to another value is similar to the case in which the quantity M of frequency domain subresources or subsequences is 3 or 5, provided that the third sequence is a sequence in a segmented form. The case falls within the protection scope of this application. Details are not described herein again.

S202: The first network device sends the first signal.

S203: The first network device/a second network device/a second terminal device receives an echo signal.

The first signal may be an integrated sensing and communication signal or a communication-sensing integrated signal, and the first signal may be used for sensing or communication. For example, the first signal is used for sensing, the first signal is used for sensing and channel measurement, the first signal is used for sensing and channel estimation, or the first signal is used for sensing and downlink data transmission. The echo signal is generated after the first signal sent by the first network device is reflected by a target in an environment. The first network device, the second network device, or the second terminal device may receive the echo signal on the first frequency domain resource.

For example, if the first signal is a demodulation reference signal used for sensing, the signal is used for sensing and channel estimation. For another example, if the first signal is a channel state information reference signal used for sensing, the signal is used for sensing and channel measurement. For another example, if the first signal is a signal that is carried on a physical downlink shared channel (physical downlink shared channel, PDSCH) and that is used for sensing, the signal is used for sensing and downlink data transmission.

In the scenario shown in FIG. 1(a), the first network device sends the first signal, and receives, on the first frequency domain resource, an echo signal that is generated by reflection by a target in an environment. The first network device may sense information such as location and speed of the target based on the first signal and the echo signal.

In the scenario shown in FIG. 1(b), the first network device sends the first signal, and a first terminal device receives the first signal. The first signal carries data or a reference signal sequence that is sent by the first network device to the first terminal device, and the reference signal sequence may be used for channel measurement, channel estimation, or the like. Therefore, a communication function of the first signal is implemented. In addition, the first network device sends the first signal, and the second network device receives the echo signal of the first signal. Therefore, a sensing function of the first signal is implemented.

Optionally, the first network device may send first information to the second network device and/or the first terminal device. The first information indicates parameter information of the third sequence. The second network device receives the first information, and determines the third sequence based on the parameter information indicated by the first information. The first terminal device receives the first information, and determines the third sequence based on the parameter information indicated by the first information. In addition, the first terminal device may obtain the second sequence from the first signal based on the third sequence. Further, the first terminal device may demodulate the first signal to obtain the first sequence, and then process the first sequence by using the third sequence to obtain the second sequence.

The parameter information includes a plurality of sets of parameters used to determine the third sequence. The parameters may be used to determine a plurality of relationships. For example, as shown in Table 1, a first set of parameters includes a first value a1, a second value b1, and a third value c1 of the first set. A second set of parameters includes a first value a2, a second value b2, and a third value c2 of the second set. A third set of parameters includes a first value a3, a second value b3, and a third value c3 of the third set. A fourth set of parameters includes a first value a4, a second value b4, and a third value c4 of the fourth set. Alternatively, as shown in Table 2, a first set of parameters includes a first value a1, a third value b1, d0=e1, d1=e2, and d2=e3 of the first set. A second set of parameters includes a first value a2, a third value b2, d0=e4, d1=e5, and d2=e6 of the second set. A third set of parameters includes a first value a3, a third value b3, d0=e7, d1=e8, and d2=e9 of the third set. A fourth set of parameters includes a first value a4, a third value b4, d0=e10, d1=e11, and d2=e12 of the fourth set. The foregoing M (M=3) relationships may be determined by using each set of parameters, and different relationships may be determined by using different values in each set of parameters.

Table 1

| Value of the first information | First value | Second value | Third value |
|---|---|---|---|
| 00 | a1 | b1 | c1 |
| 01 | a2 | b2 | c2 |
| 10 | a3 | b3 | c3 |
| 11 | a4 | b4 | c4 |

Table 2

| Value of the first information | First value | Third value | d0, d1, d2 |
|---|---|---|---|
| 00 | a1 | b1 | e1, e2, e3 |
| 01 | a2 | b2 | e4, e5, e6 |
| 10 | a3 | b3 | e7, e8, e9 |
| 11 | a4 | b4 | e10, e11, e12 |

The parameter information includes at least one of the following: the first value, the second value, the third value, $\mu$, v, s, and M. Optionally, the parameter information may alternatively include a quantity of subcarriers or RBs occupied by each of the M frequency domain subresources. Alternatively, the parameter information may include a quantity of subcarriers or RBs occupied by the 1st frequency domain subresource in the M frequency domain subresources. Alternatively, the parameter information may include frequency domain separation points (for example, the first frequency domain separation point A and the second frequency domain separation point B).

For example, when M=3, the parameter information of the third sequence may include the following cases: the first frequency domain separation point A, the second frequency domain separation point B, the first value, the second value, and the third value; or the first frequency domain separation point A, the second frequency domain separation point B, the first value, the third value, and the parameters d0, d1, and d2; or the first frequency domain separation point A, the second frequency domain separation point B, the first value, the third value, and the parameters $\mu$, v, s.

When M=5, the parameter information of the third sequence may include the following cases: the first frequency domain separation point A, the second frequency domain separation point B, the third frequency domain separation point C, the fourth frequency domain separation point D, the first value, the second value, and the third value; or the first frequency domain separation point A, the second frequency domain separation point B, the third frequency domain separation point C, the fourth frequency domain separation point D, the first value, the third value, and the parameters d0, d1, and d2; the first frequency domain separation point A, the second frequency domain separation point B, the third frequency domain separation point C, the fourth frequency domain separation point D, the first value, the third value, and the parameters $\mu$, v, s.

Optionally, the first information may be a plurality of bits, for example, 2 or more bits. For example, as shown in Table 1, when a value of the first information is 00, it indicates that the first value a1, the second value b1, and the third value c1 of the first set are used. The values of the elements in the 1st subsequence are all a1s, the values of the elements in the 2nd subsequence are all b1s, and the values of the elements in the 3rd subsequence are all c1s. When a value of the first information is 01, it indicates that the first value a2, the second value b2, and the third value c2 of the second set are used. The values of the elements in the 1st subsequence are all a2s, the values of the elements in the 2nd subsequence are all b2s, and the values of the elements in the 3rd subsequence are all c2s. Other values are similar, and examples are not described herein again.

Optionally, the parameter information may be predefined, or may be notified by using higher layer signaling (for example, RRC signaling). For example, as shown in Table 2, the first set of predefined parameters includes the first value a1, the third value b1, d0=e1, d1=e2, and d2=e3 of the first set. The second set of parameters includes the first value a2, the third value b2, d0=e4, d1=e5, and d2=e6 of the second set. The third set of parameters includes the first value a3, the third value b3, d0=e7, d1=e8, and d2=e9 of the third set. The fourth set of parameters includes the first value a4, the third value b4, d0=e10, d1=e11, and d2=e12 of the fourth set. The plurality of sets of parameters of the third sequence are notified by using RRC signaling, and then the first information indicates that the third sequence uses one or more sets of parameters in the plurality of sets of parameters.

The first terminal device receives the first signal, demodulates the first signal to obtain the first sequence, and determines the third sequence based on the received first information. Then, the first sequence is processed based on the third sequence to obtain the second sequence, to obtain the communication data or the communication reference sequence carried in the second sequence, so as to implement communication between the first network device and the first terminal device. Optionally, the second network device may determine the third sequence based on the first information. When the first network device and the second network device know the second sequence, different third sequences may be designed to be multiplied by the second sequence to obtain first sequences, and different first signals are generated by using the different first sequences for sensing, to adapt to different sensing performance requirements. In addition, the first network device and the first terminal device can communicate with each other.

In the scenario shown in FIG. 1(c), the first network device sends the first signal, and the second terminal device may receive the first signal on the first frequency domain resource, to obtain communication data or a communication reference signal sequence that is sent by the first network device to the second terminal device. That is, the first network device and the second terminal device communicate with each other by using the first signal. The first signal carries the data or the reference signal sequence that is sent by the first network device to the first terminal device, and the reference signal sequence may be used for channel measurement, channel estimation, or the like. In addition, the second terminal device may also receive an echo signal generated by reflection by a target in an environment, and estimate parameters such as a location and a speed of the target in the environment based on the echo signal.

Optionally, the first network device may send the first information to the second terminal device. The first information indicates the parameter information of the third sequence. The parameter information includes at least one of the following: the first value, the second value, the third value, $\mu$, v, s, and M. Optionally, the parameter information may alternatively include the quantity of subcarriers or RBs occupied by each of the M frequency domain subresources. Alternatively, the parameter information may include the quantity of subcarriers or RBs occupied by the $1^{st}$ frequency domain subresource in the M frequency domain subresources. Alternatively, the parameter information may include the frequency domain separation points (for example, the frequency domain separation point A and the frequency domain separation point B). This is similar to the foregoing, and is not described herein again.

The second terminal device determines the third sequence based on the first information, and processes the first signal based on the third sequence, to obtain the second sequence. In this way, the communication data or the communication reference sequence carried in the second sequence is obtained, to implement communication between the first network device and the second terminal device. Optionally, the second terminal device receives the echo signal of the first signal for sensing. First sequences generated by using different third sequences are different, and generated first signals are also different. However, different first signals have different sensing performance, and therefore, when the second terminal device receives the echo signal and performs sensing processing, different sensing performance may also be implemented.

In this embodiment of this application, the second sequence that carries data is multiplied by the third sequence in a segmented form, to generate the integrated sensing and communication signal. The generated integrated sensing and communication signal may have different properties by designing the third sequence in different forms, to satisfy different sensing and communication requirements. For example, when the third sequence is a sequence in a concave form, a root-mean-square bandwidth of the integrated sensing and communication signal may be increased, to improve ranging precision of the integrated sensing and communication signal. When the third sequence includes a subsequence in a convex form, a lower peak-to-sidelobe ratio of a range spectrum is obtained by sensing by using the integrated sensing and communication signal, to reduce a false alarm probability of sensing.

It may be understood that, in the foregoing method embodiment, the methods and operations implemented by the terminal device may alternatively be implemented by a component (for example, a chip or a circuit) that may be used in the terminal device, and the methods and operations implemented by the network device may alternatively be implemented by a component (for example, a chip or a circuit) that may be used in the network device.

In embodiments of this application, functional modules of the terminal device or the network device may be obtained through division based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division corresponding to each function.

The foregoing describes in detail the method provided in embodiments of this application with reference to FIG. 2. The communication apparatus provided in embodiments of this application is described in detail with reference to FIG. 9 and FIG. 10. It should be understood that descriptions of apparatus embodiments correspond to descriptions of the method embodiment. Therefore, for content that is not described in detail, refer to the foregoing method embodiment. For brevity, details are not described herein again.

FIG. 10 is a diagram of a structure of a communication apparatus according to an embodiment of this application. The communication apparatus may include a receiving module 1001, a processing module 1002, and a sending module 1003. The receiving module 1001 and the sending module 1003 may communicate with the outside, and the processing module 1002 is configured to perform processing, for example, generate a first signal.

In a possible design, the communication apparatus may implement steps or procedures that are performed by the first network device or the second network device in the foregoing method embodiment, for example, may be the first network device or the second network device, or a chip or a circuit configured in the first network device or the second network device. The receiving module 1001 and the sending module 1003 are configured to perform receiving and sending-related operations of the first network device or the second network device in the foregoing method embodiment. The processing module 1002 is configured to perform processing-related operations of the first network device or the second network device in the foregoing method embodiment.

In an embodiment:

The processing module 1002 is configured to generate the first signal based on a first sequence, where the first sequence is a product of a second sequence and a third sequence.

The first sequence includes N first elements, the second sequence includes N second elements, the second sequence carries data, and the third sequence includes N third elements greater than or equal to 0.

The $i^{th}$ element in the second sequence corresponds to the $i^{th}$ subcarrier in N subcarriers in a first frequency domain resource, the $i^{th}$ element in the third sequence corresponds to the $i^{th}$ subcarrier in the first frequency domain resource, the $i^{th}$ element in the first sequence is carried on the $i^{th}$ subcarrier in the first frequency domain resource, N is an integer greater than 1, and i is an integer greater than or equal to 1 and less than or equal to N.

The first frequency domain resource includes M non-overlapping frequency domain subresources, the third sequence includes M subsequences, the $t^{th}$ subsequence in the M subsequences corresponds to the $t^{th}$ frequency domain subresource in the M frequency domain subresources, the $t^{th}$ subsequence in the M subsequences satisfies the $t^{th}$ relationship in M relationships, M is an integer greater than or equal to 2 and less than or equal to N, and t is an integer greater than or equal to 1 and less than or equal to M.

The sending module 1003 is configured to send the first signal.

Optionally, the $i^{th}$ element in the third sequence is equal to the $(N-i+1)^{th}$ element in the third sequence.

Optionally, values of elements in at least one of the M subsequences are all the same.

Optionally, M is equal to 3, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;

the $2^{nd}$ subsequence in the M subsequences satisfies the $2^{nd}$ relationship in the M relationships, and the $2^{nd}$ relationship is:

values of elements in the $2^{nd}$ subsequence are all second values, a value of an element in the $2^{nd}$ subsequence satisfies a polynomial function of a square of $(k-(N-1)/2)$, or a value of an element in the $2^{nd}$ subsequence satisfies a functional relationship $\sqrt{\dfrac{1}{\mu(k-\dfrac{N-1}{2})^2+v}+s}$ , where $\left|\dfrac{12v}{\mu(N-1)N(N+1)}\right|>0.5$ , k is a sequence number, in the third sequence, of an element in the $2^{nd}$ subsequence, $\mu$ is less than 0, v is greater than 0, and s is greater than 0;

the $3^{rd}$ subsequence in the M subsequences satisfies the $3^{rd}$ relationship in the M relationships, and the $3^{rd}$ relationship is: values of elements in the $3^{rd}$ subsequence are all third values; and

the first value and the third value are both greater than the second value.

Optionally, M is equal to 5, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;

the $2^{nd}$ subsequence in the M subsequences satisfies the $2^{nd}$ relationship in the M relationships, and the $2^{nd}$ relationship is: values of elements in the $2^{nd}$ subsequence are all 1s;

the $3^{rd}$ subsequence in the M subsequences satisfies the $3^{rd}$ relationship in the M relationships, and the $3^{rd}$ relationship is:

values of elements in the $3^{rd}$ subsequence are all second values, a value of an element in the $3^{rd}$ subsequence satisfies a polynomial function of a square of $(k-(N-1)/2)$, or a value of an element in the $3^{rd}$ subsequence satisfies a functional relationship $\sqrt{\dfrac{1}{\mu(k-\dfrac{N-1}{2})^2+v}+s}$ , where $\left|\dfrac{12v}{\mu(N-1)N(N+1)}\right|>0.5$ , k is a sequence number, in the third sequence, of an element in the $3^{rd}$ subsequence, $\mu$ is less than 0, v is greater than 0, and s is greater than 0;

the $4^{th}$ subsequence in the M subsequences satisfies the $4^{th}$ relationship in the M relationships, and the $4^{th}$

relationship is: values of elements in the 4th subsequence are all 1s;

the 5th subsequence in the M subsequences satisfies the 5th relationship in the M relationships, and the 5th relationship is: values of elements in the 5th subsequence are all third values; and

the first value and the third value are both greater than 1, and the second value is greater than 0 and less than or equal to 1.

Optionally, the $k^{th}$ element in the third sequence is less than or equal to a larger value in the $k1^{th}$ element in the third sequence and the $k2^{th}$ element in the third sequence, where k, k1, and k2 are all integers greater than or equal to 1 and less than or equal to N, k2 is greater than k1, and k is greater than or equal to k1 and less than or equal to k2.

Optionally, the 1st subsequence in the M subsequences satisfies the 1st relationship in the M relationships, and the 1st relationship is: the $k1^{th}$ element in the 1st subsequence is greater than or equal to the $k2^{th}$ element in the 1st subsequence. The 2nd subsequence in the M subsequences satisfies the 2nd relationship in the M relationships, and the 2nd relationship is: the $k^{th}$ element in the 2nd subsequence is greater than or equal to a smaller value in the $k1^{th}$ element in the 2nd subsequence and the $k2^{th}$ element in the 2nd subsequence. The 3rd subsequence in the M subsequences satisfies the 3rd relationship in the M relationships, and the 3rd relationship is: the $k1^{th}$ element in the 3rd subsequence is less than or equal to the $k2^{th}$ elements in the 3rd subsequence, where k, k1, and k2 are all integers greater than or equal to 1 and less than or equal to N, k2 is greater than k1, and k is greater than or equal to k1 and less than or equal to k2. The 1st subsequence is a monotonically decreasing sequence, the 2nd subsequence is a sequence in a convex form, and the 3rd subsequence is a monotonically increasing sequence.

Optionally, the sending module is further configured to send first information to a second network device and/or a terminal device, where the first information indicates parameter information of the third sequence, and the parameter information includes at least one of the following: the first value, the second value, the third value, $\mu$, v, s, and M.

Optionally, the first signal is used for sensing, the first signal is used for sensing and channel measurement, the first signal is used for sensing and channel estimation, or the first signal is used for sensing and data transmission.

Optionally, the receiving module 1001 is configured to receive an echo signal of the first signal.

In another embodiment:

The receiving module 1001 is configured to receive an echo signal of a first signal, where the first signal is generated based on a first sequence, and the first sequence is a product of a second sequence and a third sequence.

The first sequence includes N first elements, the second sequence includes N second elements, the second sequence carries data, and the third sequence includes N third elements greater than or equal to 0.

The $i^{th}$ element in the second sequence corresponds to the $i^{th}$ subcarrier in N subcarriers in a first frequency domain resource, the $i^{th}$ element in the third sequence corresponds to the $i^{th}$ subcarrier in the first frequency domain resource, the $i^{th}$ element in the first sequence is carried on the $i^{th}$ subcarrier in the first frequency domain resource, N is an integer greater than 1, and i is an integer greater than or equal to 1 and less than or equal to N.

The first frequency domain resource includes M non-overlapping frequency domain subresources, the third sequence includes M subsequences, the $t^{th}$ subsequence in the M subsequences corresponds to the $t^{th}$ frequency domain subresource in the M frequency domain subresources, the $t^{th}$ subsequence in the M subsequences satisfies the $t^{th}$ relationship in M relationships, M is an integer greater than or equal to 2 and less than or equal to N, and t is an integer greater than or equal to 1 and less than or equal to M.

Optionally, the $i^{th}$ element in the third sequence is equal to the $(N-i+1)^{th}$ element in the third sequence.

Optionally, values of elements in at least one of the M subsequences are all the same.

Optionally, M is equal to 3, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the 1st subsequence in the M subsequences satisfies the 1st relationship in the M relationships, and the 1st relationship is: values of elements in the 1st subsequence are all first values;

the 2nd subsequence in the M subsequences satisfies the 2nd relationship in the M relationships, and the 2nd relationship is:

values of elements in the 2nd subsequence are all second values, a value of an element in the 2nd subsequence satisfies a polynomial function of a square of $(k-(N-1)/2)$, or a value of an element in the 2nd subsequence satisfies

a functional relationship $\sqrt{\dfrac{1}{\mu(k-\dfrac{N-1}{2})^2+v}+s}$ , where $\left|\dfrac{12v}{\mu(N-1)N(N+1)}\right|>0.5$ , k is a sequence number, in the third sequence, of an element in the 2nd subsequence, $\mu$ is less than 0, v is greater than 0, and s is greater than 0;
the 3rd subsequence in the M subsequences satisfies the 3rd relationship in the M relationships, and the 3rd relationship is: values of elements in the 3rd subsequence are all third values; and
the first value and the third value are both greater than the second value.

Optionally, M is equal to 5, a start frequency of the t1th frequency domain subresource in the M frequency domain subresources is less than a start frequency of the t2th frequency domain subresource in the M frequency domain subresources, t1 is an integer greater than or equal to 1 and less than M, t2 is an integer greater than 1 and less than or equal to M, and t1 is less than t2;

the 1st subsequence in the M subsequences satisfies the 1st relationship in the M relationships, and the 1st relationship is: values of elements in the 1st subsequence are all first values;
the 2nd subsequence in the M subsequences satisfies the 2nd relationship in the M relationships, and the 2nd relationship is: values of elements in the 2nd subsequence are all 1s;
the 3rd subsequence in the M subsequences satisfies the 3rd relationship in the M relationships, and the 3rd relationship is:

values of elements in the 3rd subsequence are all second values, a value of an element in the 3rd subsequence satisfies a polynomial function of a square of $(k-(N-1)/2)$, or a value of an element in the 3rd subsequence satisfies

a functional relationship $\sqrt{\dfrac{1}{\mu(k-\dfrac{N-1}{2})^2+v}+s}$ , where $\left|\dfrac{12v}{\mu(N-1)N(N+1)}\right| > 0.5$ , k is a sequence number, in the third sequence, of an element in the 3rd subsequence, $\mu$ is less than 0, v is greater than 0, and s is greater than 0;
the 4th subsequence in the M subsequences satisfies the 4th relationship in the M relationships, and the 4th relationship is: values of elements in the 4th subsequence are all 1s;
the 5th subsequence in the M subsequences satisfies the 5th relationship in the M relationships, and the 5th relationship is: values of elements in the 5th subsequence are all third values; and
the first value and the third value are both greater than 1, and the second value is greater than 0 and less than or equal to 1.

Optionally, the kth element in the third sequence is less than or equal to a larger value in the k1th element in the third sequence and the k2th element in the third sequence, where k, k1, and k2 are all integers greater than or equal to 1 and less than or equal to N, k2 is greater than k1, and k is greater than or equal to k1 and less than or equal to k2.
Optionally, the 1st subsequence in the M subsequences satisfies the 1st relationship in the M relationships, and the 1st relationship is: the k1th element in the 1st subsequence is greater than or equal to the k2th element in the 1st subsequence. The 2nd subsequence in the M subsequences satisfies the 2nd relationship in the M relationships, and the 2nd relationship is: the kth element in the 2nd subsequence is greater than or equal to a smaller value in the k1th element in the 2nd subsequence and the k2th element in the 2nd subsequence. The 3rd subsequence in the M subsequences satisfies the 3rd relationship in the M relationships, and the 3rd relationship is: the k1th element in the 3rd subsequence is less than or equal to the k2th elements in the 3rd subsequence, where k, k1, and k2 are all integers greater than or equal to 1 and less than or equal to N, k2 is greater than k1, and k is greater than or equal to k1 and less than or equal to k2. The 1st subsequence is a monotonically decreasing sequence, the 2nd subsequence is a sequence in a convex form, and the 3rd subsequence is a monotonically increasing sequence.
Optionally, the receiving module 1001 is further configured to receive first information sent by a first network device, where the first information indicates parameter information of the third sequence, and the parameter information includes at least one of the following: the first value, the second value, the third value, $\mu$, v, s, and M.
Optionally, the first signal is used for sensing, the first signal is used for sensing and channel measurement, the first signal is used for sensing and channel estimation, or the first signal is used for sensing and data transmission.
It should be noted that for implementation of the modules, refer to corresponding descriptions in the method embodiment shown in FIG. 2, to perform the method and functions performed by the first network device or the second network device in the foregoing embodiments.
FIG. 11 is a diagram of a structure of another communication apparatus according to an embodiment of this application. The communication apparatus may include a receiving module 1101 and a processing module 1102. The receiving module 1101 may communicate with the outside, and the processing module 1102 is configured to perform processing, for example, demodulate a first signal.

In a possible design, the communication apparatus may implement steps or procedures that are performed by the first terminal device or the second terminal device in the foregoing method embodiment, for example, may be the first terminal device or the second terminal device, or a chip or a circuit configured in the first terminal device or the second terminal device. The receiving module 1101 is configured to perform a receiving and sending related operation of the first terminal device or the second terminal device in the foregoing method embodiment, and the processing module 1102 is configured to perform a processing related operation of the first terminal device or the second terminal device in the foregoing method embodiment.

In an embodiment:

The receiving module 1101 is configured to receive a first signal, where the first signal is generated based on a first sequence, and the first sequence is a product of a second sequence and a third sequence.

The first sequence includes N first elements, the second sequence includes N second elements, the second sequence carries data, and the third sequence includes N third elements greater than or equal to 0.

The $i^{th}$ element in the second sequence corresponds to the $i^{th}$ subcarrier in N subcarriers in a first frequency domain resource, the $i^{th}$ element in the third sequence corresponds to the $i^{th}$ subcarrier in the first frequency domain resource, the $i^{th}$ element in the first sequence is carried on the $i^{th}$ subcarrier in the first frequency domain resource, N is an integer greater than 1, and i is an integer greater than or equal to 1 and less than or equal to N.

The first frequency domain resource includes M non-overlapping frequency domain subresources, the third sequence includes M subsequences, the $t^{th}$ subsequence in the M subsequences corresponds to the $t^{th}$ frequency domain subresource in the M frequency domain subresources, the $t^{th}$ subsequence in the M subsequences satisfies the $t^{th}$ relationship in M relationships, M is an integer greater than or equal to 2 and less than or equal to N, and t is an integer greater than or equal to 1 and less than or equal to M.

Optionally, the $i^{th}$ element in the third sequence is equal to the $(N-i+1)^{th}$ element in the third sequence.

Optionally, values of elements in at least one of the M subsequences are all the same.

Optionally, M is equal to 3, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;

the $2^{nd}$ subsequence in the M subsequences satisfies the $2^{nd}$ relationship in the M relationships, and the $2^{nd}$ relationship is:

values of elements in the $2^{nd}$ subsequence are all second values, a value of an element in the $2^{nd}$ subsequence satisfies a polynomial function of a square of $(k-(N-1)/2)$, or a value of an element in the $2^{nd}$ subsequence satisfies a functional relationship $\sqrt{\dfrac{1}{\mu(k-\dfrac{N-1}{2})^2+v}+s}$ , where $\left|\dfrac{12v}{\mu(N-1)N(N+1)}\right|>0.5$ , k is a sequence number, in the third sequence, of an element in the $2^{nd}$ subsequence, $\mu$ is less than 0, v is greater than 0, and s is greater than 0;

the $3^{rd}$ subsequence in the M subsequences satisfies the $3^{rd}$ relationship in the M relationships, and the $3^{rd}$ relationship is: values of elements in the $3^{rd}$ subsequence are all third values; and

the first value and the third value are both greater than the second value.

Optionally, M is equal to 5, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;

the $2^{nd}$ subsequence in the M subsequences satisfies the $2^{nd}$ relationship in the M relationships, and the $2^{nd}$ relationship is: values of elements in the $2^{nd}$ subsequence are all 1s;

the $3^{rd}$ subsequence in the M subsequences satisfies the $3^{rd}$ relationship in the M relationships, and the $3^{rd}$ relationship is:

values of elements in the 3rd subsequence are all second values, a value of an element in the 3rd subsequence satisfies a polynomial function of a square of ($k$-($N$-1)/2), or a value of an element in the 3rd subsequence satisfies

a functional relationship $\sqrt{\dfrac{1}{\mu(k-\dfrac{N-1}{2})^2+v}+s}$ , where $\left|\dfrac{12v}{\mu(N-1)N(N+1)}\right|>0.5$ , k is a sequence number, in the third sequence, of an element in the 3rd subsequence, $\mu$ is less than 0, v is greater than 0, and s is greater than 0;

the 4th subsequence in the M subsequences satisfies the 4th relationship in the M relationships, and the 4th relationship is: values of elements in the 4th subsequence are all 1s;

the 5th subsequence in the M subsequences satisfies the 5th relationship in the M relationships, and the 5th relationship is: values of elements in the 5th subsequence are all third values; and

the first value and the third value are both greater than 1, and the second value is greater than 0 and less than or equal to 1.

Optionally, the kth element in the third sequence is less than or equal to a larger value in the k1th element in the third sequence and the k2th element in the third sequence, where k, k1, and k2 are all integers greater than or equal to 1 and less than or equal to N, k2 is greater than k1, and k is greater than or equal to k1 and less than or equal to k2.

Optionally, the 1st subsequence in the M subsequences satisfies the 1st relationship in the M relationships, and the 1st relationship is: the k1th element in the 1st subsequence is greater than or equal to the k2th element in the 1st subsequence. The 2nd subsequence in the M subsequences satisfies the 2nd relationship in the M relationships, and the 2nd relationship is: the kth element in the 2nd subsequence is greater than or equal to a smaller value in the k1th element in the 2nd subsequence and the k2th element in the 2nd subsequence. The 3rd subsequence in the M subsequences satisfies the 3rd relationship in the M relationships, and the 3rd relationship is: the k1th element in the 3rd subsequence is less than or equal to the k2th elements in the 3rd subsequence, where k, k1, and k2 are all integers greater than or equal to 1 and less than or equal to N, k2 is greater than k1, and k is greater than or equal to k1 and less than or equal to k2. The 1st subsequence is a monotonically decreasing sequence, the 2nd subsequence is a sequence in a convex form, and the 3rd subsequence is a monotonically increasing sequence.

Optionally, the receiving module 1101 is further configured to receive first information sent by a first network device, where the first information indicates parameter information of the third sequence, and the parameter information includes at least one of the following: the first value, the second value, the third value, $\mu$, v, s, and M.

The processing module 1102 is configured to obtain the second sequence from the first signal based on the first information.

In another embodiment:

The receiving module 1101 is configured to receive an echo signal of a first signal, where the first signal is generated based on a first sequence, and the first sequence is a product of a second sequence and a third sequence.

The first sequence includes N first elements, the second sequence includes N second elements, the second sequence carries data, and the third sequence includes N third elements greater than or equal to 0.

The ith element in the second sequence corresponds to the ith subcarrier in N subcarriers in a first frequency domain resource, the ith element in the third sequence corresponds to the ith subcarrier in the first frequency domain resource, the ith element in the first sequence is carried on the ith subcarrier in the first frequency domain resource, N is an integer greater than 1, and i is an integer greater than or equal to 1 and less than or equal to N.

The first frequency domain resource includes M non-overlapping frequency domain subresources, the third sequence includes M subsequences, the tth subsequence in the M subsequences corresponds to the tth frequency domain subresource in the M frequency domain subresources, the tth subsequence in the M subsequences satisfies the tth relationship in M relationships, M is an integer greater than or equal to 2 and less than or equal to N, and t is an integer greater than or equal to 1 and less than or equal to M.

Optionally, the ith element in the third sequence is equal to the (N-i+1)th element in the third sequence.

Optionally, values of elements in at least one of the M subsequences are all the same.

Optionally, M is equal to 3, a start frequency of the t1th frequency domain subresource in the M frequency domain subresources is less than a start frequency of the t2th frequency domain subresource in the M frequency domain subresources, t1 is an integer greater than or equal to 1 and less than M, t2 is an integer greater than 1 and less than or equal to M, and t1 is less than t2;

the 1st subsequence in the M subsequences satisfies the 1st relationship in the M relationships, and the 1st relationship is: values of elements in the 1st subsequence are all first values;

the 2nd subsequence in the M subsequences satisfies the 2nd relationship in the M relationships, and the 2nd relationship is:

values of elements in the 2nd subsequence are all second values, a value of an element in the 2nd subsequence satisfies a polynomial function of a square of $(k-(N-1)/2)$, or a value of an element in the 2nd subsequence satisfies a functional relationship $\sqrt{\dfrac{1}{\mu(k-\dfrac{N-1}{2})^2+v}+s}$, where $\left|\dfrac{12v}{\mu(N-1)N(N+1)}\right|>0.5$, k is a sequence number, in the third sequence, of an element in the 2nd subsequence, $\mu$ is less than 0, v is greater than 0, and s is greater than 0;

the 3rd subsequence in the M subsequences satisfies the 3rd relationship in the M relationships, and the 3rd relationship is: values of elements in the 3rd subsequence are all third values; and

the first value and the third value are both greater than the second value.

Optionally, M is equal to 5, a start frequency of the t1th frequency domain subresource in the M frequency domain subresources is less than a start frequency of the t2th frequency domain subresource in the M frequency domain subresources, t1 is an integer greater than or equal to 1 and less than M, t2 is an integer greater than 1 and less than or equal to M, and t1 is less than t2;

the 1st subsequence in the M subsequences satisfies the 1st relationship in the M relationships, and the 1st relationship is: values of elements in the 1st subsequence are all first values;

the 2nd subsequence in the M subsequences satisfies the 2nd relationship in the M relationships, and the 2nd relationship is: values of elements in the 2nd subsequence are all 1s;

the 3rd subsequence in the M subsequences satisfies the 3rd relationship in the M relationships, and the 3rd relationship is:

values of elements in the 3rd subsequence are all second values, a value of an element in the 3rd subsequence satisfies a polynomial function of a square of $(k-(N-1)/2)$, or a value of an element in the 3rd subsequence satisfies a functional relationship $\sqrt{\dfrac{1}{\mu(k-\dfrac{N-1}{2})^2+v}+s}$, where $\left|\dfrac{12v}{\mu(N-1)N(N+1)}\right|>0.5$, k is a sequence number, in the third sequence, of an element in the 3rd subsequence, $\mu$ is less than 0, v is greater than 0, and s is greater than 0;

the 4th subsequence in the M subsequences satisfies the 4th relationship in the M relationships, and the 4th relationship is: values of elements in the 4th subsequence are all 1s;

the 5th subsequence in the M subsequences satisfies the 5th relationship in the M relationships, and the 5th relationship is: values of elements in the 5th subsequence are all third values; and

the first value and the third value are both greater than 1, and the second value is greater than 0 and less than or equal to 1.

Optionally, the kth element in the third sequence is less than or equal to a larger value in the k1th element in the third sequence and the k2th element in the third sequence, where k, k1, and k2 are all integers greater than or equal to 1 and less than or equal to N, k2 is greater than k1, and k is greater than or equal to k1 and less than or equal to k2.

Optionally, the 1st subsequence in the M subsequences satisfies the 1st relationship in the M relationships, and the 1st relationship is: the k1th element in the 1st subsequence is greater than or equal to the k2th element in the 1st subsequence. The 2nd subsequence in the M subsequences satisfies the 2nd relationship in the M relationships, and the 2nd relationship is: the kth element in the 2nd subsequence is greater than or equal to a smaller value in the k1th element in the 2nd subsequence and the k2th element in the 2nd subsequence. The 3rd subsequence in the M subsequences satisfies the 3rd relationship in the M relationships, and the 3rd relationship is: the k1th element in the 3rd subsequence is less than or equal to the k2th elements in the 3rd subsequence, where k, k1, and k2 are all integers greater than or equal to 1 and less than or equal to N, k2 is greater than k1, and k is greater than or equal to k1 and less than or equal to k2. The 1st subsequence is a monotonically decreasing sequence, the 2nd subsequence is a sequence in a convex form, and the 3rd subsequence is a monotonically increasing sequence.

Optionally, the receiving module 1101 is further configured to receive first information sent by a first network device, where the first information indicates parameter information of the third sequence, and the parameter information includes at least one of the following: the first value, the second value, the third value, $\mu$, v, s, and M.

Optionally, the first signal is used for sensing, the first signal is used for sensing and channel measurement, the first signal is used for sensing and channel estimation, or the first signal is used for sensing and data transmission.

It should be noted that for implementation of the modules, refer to corresponding descriptions in the method embodiment shown in FIG. 2, to perform the method and functions performed by the first terminal device or the second terminal device in the foregoing embodiments.

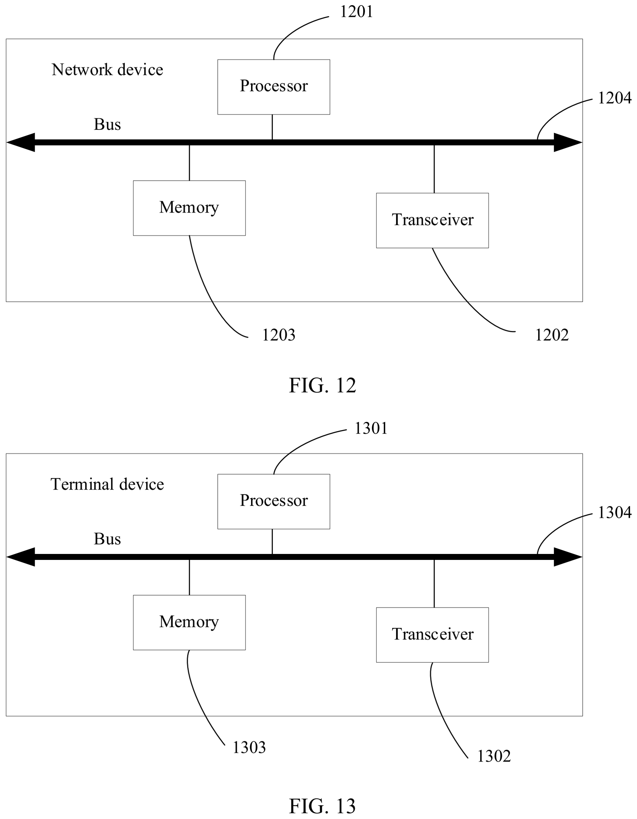

FIG. 12 is a diagram of a structure of a network device according to an embodiment of this application. The network device may be applied to the systems shown in FIG. 1(a), FIG. 1(b), and FIG. 1(c), to perform functions of the network device in the foregoing method embodiment, or implement steps or procedures performed by the network device in the foregoing method embodiment.

As shown in FIG. 12, the network device includes a processor 1201 and a transceiver 1202. Optionally, the network device further includes a memory 1203. The processor 1201, the transceiver 1202, and the memory 1203 may communicate with each other through an internal connection path, to transmit a control signal and/or a data signal. The memory 1203 is configured to store a computer program, and the processor 1201 is configured to invoke the computer program from the memory 1203 and run the computer program, to control the transceiver 1202 to receive a signal and send a signal. Optionally, the network device may further include an antenna, configured to send, by using a radio signal, uplink data or uplink control signaling that is output by the transceiver 1202.

The processor 1201 and the memory 1203 may be combined into one processing apparatus, and the processor 1201 is configured to execute program code stored in the memory 1203 to implement the foregoing functions. During specific implementation, the memory 1203 may alternatively be integrated into the processor 1201, or be independent of the processor 1201. The processor 1201 may correspond to the processing module in FIG. 10.

The transceiver 1202 may correspond to the receiving module and the sending module in FIG. 10, and may also be referred to as a transceiver unit or a transceiver module. The transceiver 1202 may include a receiver (or referred to as a receiver machine or a receiver circuit) and a transmitter (or referred to as a transmitter machine or a transmitter circuit). The receiver machine is configured to receive a signal, and the transmitter machine is configured to transmit a signal.

It should be understood that the network device shown in FIG. 12 can implement the processes related to the network device in the method embodiment shown in FIG. 2. Operations and/or functions of the modules in the network device are intended to implement corresponding procedures in the foregoing method embodiment. For details, refer to the descriptions in the foregoing method embodiment. To avoid repetition, detailed descriptions are properly omitted herein.

The processor 1201 may be configured to perform an action that is implemented inside the network device and that is described in the foregoing method embodiment. The transceiver 1202 may be configured to perform an action of sending by the network device to a network device or an action of receiving from the network device in the foregoing method embodiment. For details, refer to the descriptions in the foregoing method embodiment. Details are not described herein again.

The processor 1201 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. The processor 1201 may alternatively be a combination for implementing a computing function, for example, a combination of one or more microprocessors or a combination of a digital signal processor and a microprocessor. The communication bus 1204 may be a peripheral component interconnect PCI bus, an extended industry standard architecture EISA bus, or the like. The bus may be classified into an address bus, a data bus, a control bus, and the like. For ease of representation, only one bold line indicates the bus in FIG. 12, but this does not mean that there is only one bus or only one type of bus. The communication bus 1204 is configured to implement connection and communication between these components. The transceiver 1202 in this embodiment of this application is configured to perform signaling or data communication with another node device. The memory 1203 may include a volatile memory, such as a non-volatile dynamic random access memory (nonvolatile random access memory, NVRAM), a phase-change random access memory (phase change RAM, PRAM), or a magnetoresistive random access memory (magnetoresistive RAM, MRAM). The memory may further include a nonvolatile memory, such as at least one magnetic disk storage device, an electrically erasable programmable read-only memory (electrically erasable programmable read-only memory, EEPROM), a flash storage device such as a NOR flash memory (NOR flash memory) or a NAND flash memory (NAND flash memory), or a semiconductor device such as a solid-state drive (solid-state drive, SSD). Optionally, the memory 1203 may alternatively be at least one storage apparatus located away from the processor 1201. Optionally, the memory 1203 may further store a group of computer program code or configuration information. Optionally, the processor 1201 may further execute a program stored in the memory 1203. The processor may cooperate with the memory and the transceiver to perform any method and function of the network device in embodiments of this application.

FIG. 13 is a diagram of a structure of a terminal device according to an embodiment of this application. The terminal device may be applied to the systems shown in FIG. 1(a), FIG. 1(b), and FIG. 1(c), to perform functions of the terminal device in the foregoing method embodiment, or implement steps or procedures performed by the terminal device in the foregoing method embodiment.

As shown in FIG. 13, the terminal device includes a processor 1301 and a transceiver 1302. Optionally, the terminal device further includes a memory 1303. The processor 1301, the transceiver 1302, and the memory 1303 may communicate with each other through an internal connection path, to transmit a control signal and/or a data signal. The memory 1303 is configured to store a computer program, and the processor 1301 is configured to invoke the computer program from the memory 1303 and run the computer program, to control the transceiver 1302 to receive a signal and send a signal. Optionally, the terminal device may further include an antenna, configured to send, by using a radio signal, uplink data or uplink control signaling that is output by the transceiver 1302.

The processor 1301 and the memory 1303 may be combined into one processing apparatus, and the processor 1301 is configured to execute program code stored in the memory 1303 to implement the foregoing functions. During specific implementation, the memory 1303 may alternatively be integrated into the processor 1301, or be independent of the processor 1301. The processor 1301 may correspond to the processing module in FIG. 11.

The transceiver 1302 may correspond to the receiving module in FIG. 11, and may also be referred to as a transceiver unit or a transceiver module. The transceiver 1302 may include a receiver (or referred to as a receiver machine or a receiver circuit) and a transmitter (or referred to as a transmitter machine or a transmitter circuit). The receiver machine is configured to receive a signal, and the transmitter machine is configured to transmit a signal.

It should be understood that the terminal device shown in FIG. 13 can implement the processes related to the terminal device in the method embodiment of FIG. 2. Operations and/or functions of the modules in the terminal device are intended to implement corresponding procedures in the foregoing method embodiment. For details, refer to the descriptions in the foregoing method embodiment. To avoid repetition, detailed descriptions are properly omitted herein.

The processor 1301 may be configured to perform an action that is implemented inside the terminal device and that is described in the foregoing method embodiment. The transceiver 1302 may be configured to perform an action of sending by the terminal device to a terminal device or an action of receiving from the terminal device in the foregoing method embodiment. For details, refer to the descriptions in the foregoing method embodiment. Details are not described herein again.

The processor 1301 may be processors of various types mentioned above. The communication bus 1304 may be a peripheral component interconnect PCI bus, an extended industry standard architecture EISA bus, or the like. The bus may be classified into an address bus, a data bus, a control bus, and the like. For ease of representation, only one bold line indicates the bus in FIG. 13, but this does not mean that there is only one bus or only one type of bus. The communication bus 1304 is configured to implement connection and communication between these components. The transceiver 1302 of the device in this embodiment of this application is configured to perform signaling or data communication with another device. The memory 1303 may be memories of various types mentioned above. Optionally, the memory 1303 may alternatively be at least one storage apparatus located away from the processor 1301. The memory 1303 stores a group of computer program code or configuration information, and the processor 1301 executes a program in the memory 1303. The processor may cooperate with the memory and the transceiver to perform any method and function of the terminal device in embodiments of this application.

An embodiment of this application further provides a chip system. The chip system includes a processor, configured to support a terminal device or an access network device in implementing a function in any one of the foregoing embodiments, for example, generating or processing the first signal in the foregoing method. In a possible design, the chip system may further include a memory, and the memory is configured to store program instructions and data that are necessary for the terminal device or the access network device. The chip system may include a chip, or may include a chip and another discrete component. Input and output of the chip system respectively correspond to receiving and sending operations of the terminal device or the access network device in the method embodiment.

An embodiment of this application further provides a processing apparatus, including a processor and an interface. The processor may be configured to perform the method in the foregoing method embodiment.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing method can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be noted that, the processor in embodiments of this application may be an integrated circuit chip, and has a signal processing capability. In an implementation process, steps in the foregoing method embodiment can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the method disclosed with reference to embodiments of this application may be directly performed by a hardware decoding processor, or may be performed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

According to the method provided in embodiments of this application, this application further provides a computer program product. The computer program product includes a computer program, and when the computer program runs on a computer, the computer is enabled to perform the method in any one of the embodiments shown in FIG. 2.

According to the method provided in embodiments of this application, this application further provides a computer-readable medium. The computer-readable medium stores a computer program, and when the computer program runs on a computer, the computer is enabled to perform the method in any one of the embodiments shown in FIG. 2.

According to the method provided in embodiments of this application, this application further provides a communication system. The communication system includes the foregoing one or more terminal devices and the foregoing one or more access network devices.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid state disc, SSD)), or the like.

The access network device and the terminal device in the foregoing apparatus embodiments correspond to the access network device or the terminal device in the method embodiment, and corresponding modules or units perform corresponding steps. For example, a receiving module and a sending module (a transceiver) perform receiving or sending steps in the method embodiment, and a step other than sending and receiving steps may be performed by a processing module (a processor). For a function of a specific module, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed by various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional modules in embodiments of this application may be integrated into one processing module, or each of the modules may exist alone physically, or two or more modules may be integrated into one module.

When the functions are implemented in the form of a software functional unit and sold or used as an independent product, the functions may be stored in a computer-readable storage medium. Based on such an understanding, technical solutions of this application essentially, or the part contributing to the conventional technology, or some of the technical solutions may be implemented in a form of a software product. The computer software product is stored in a storage medium, and includes a plurality of instructions for instructing a computer device (which may be a personal computer, a server, or an access network device) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

   generating, by a first network device, a first signal based on a first sequence, wherein the first sequence is a product of a second sequence and a third sequence, wherein
   the first sequence comprises N first elements, the second sequence comprises N second elements, the second sequence carries data, and the third sequence comprises N third elements greater than or equal to 0;
   the $i^{th}$ element in the second sequence corresponds to the $i^{th}$ subcarrier in N subcarriers in a first frequency domain resource, the $i^{th}$ element in the third sequence corresponds to the $i^{th}$ subcarrier in the first frequency domain resource, the $i^{th}$ element in the first sequence is carried on the $i^{th}$ subcarrier in the first frequency domain resource, N is an integer greater than 1, and i is an integer greater than or equal to 1 and less than or equal to N; and
   the first frequency domain resource comprises M non-overlapping frequency domain subresources, the third sequence comprises M subsequences, the $t^{th}$ subsequence in the M subsequences corresponds to the $t^{th}$ frequency domain subresource in the M frequency domain subresources, the $t^{th}$ subsequence in the M subsequences satisfies the $t^{th}$ relationship in M relationships, M is an integer greater than or equal to 2 and less than or equal to N, and t is an integer greater than or equal to 1 and less than or equal to M; and
   sending, by the first network device, the first signal.

2. The method according to claim 1, wherein the $i^{th}$ element in the third sequence is equal to the $(N-i+1)^{th}$ element in the third sequence.

3. The method according to claim 1 or 2, wherein values of elements in at least one of the M subsequences are all the same.

4. The method according to any one of claims 1 to 3, wherein M is equal to 3, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;

the $2^{nd}$ subsequence in the M subsequences satisfies the $2^{nd}$ relationship in the M relationships, and the $2^{nd}$ relationship is:

values of elements in the $2^{nd}$ subsequence are all second values, a value of an element in the $2^{nd}$ subsequence satisfies a polynomial function of a square of $(k\text{-}(N\text{-}1)/2)$, or a value of an element in the $2^{nd}$ subsequence satisfies a functional relationship $\sqrt{\dfrac{1}{\mu(k-\dfrac{N-1}{2})^2+v}+s}$ , wherein

$\left|\dfrac{12v}{\mu(N-1)N(N+1)}\right| > 0.5$ , k is a sequence number, in the third sequence, of an element in the $2^{nd}$ subsequence, $\mu$ is less than 0, v is greater than 0, and s is greater than 0;

the $3^{rd}$ subsequence in the M subsequences satisfies the $3^{rd}$ relationship in the M relationships, and the $3^{rd}$ relationship is: values of elements in the $3^{rd}$ subsequence are all third values; and

the first value and the third value are both greater than the second value.

5. The method according to any one of claims 1 to 3, wherein M is equal to 5, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;

the $2^{nd}$ subsequence in the M subsequences satisfies the $2^{nd}$ relationship in the M relationships, and the $2^{nd}$ relationship is: values of elements in the $2^{nd}$ subsequence are all 1s;

the $3^{rd}$ subsequence in the M subsequences satisfies the $3^{rd}$ relationship in the M relationships, and the $3^{rd}$ relationship is:

values of elements in the $3^{rd}$ subsequence are all second values, a value of an element in the $3^{rd}$ subsequence satisfies a polynomial function of a square of $(k\text{-}(N\text{-}1)/2)$, or a value of an element in the $3^{rd}$ subsequence satisfies a functional relationship $\sqrt{\dfrac{1}{\mu(k-\dfrac{N-1}{2})^2+v}+s}$ , wherein

$\left|\dfrac{12v}{\mu(N-1)N(N+1)}\right| > 0.5$ , k is a sequence number, in the third sequence, of an element in the $3^{rd}$ subsequence, $\mu$ is less than 0, v is greater than 0, and s is greater than 0;

the $4^{th}$ subsequence in the M subsequences satisfies the $4^{th}$ relationship in the M relationships, and the $4^{th}$ relationship is: values of elements in the $4^{th}$ subsequence are all 1s;

the $5^{th}$ subsequence in the M subsequences satisfies the $5^{th}$ relationship in the M relationships, and the $5^{th}$ relationship is: values of elements in the $5^{th}$ subsequence are all third values; and

the first value and the third value are both greater than 1, and the second value is greater than 0 and less than or equal to 1.

6. The method according to any one of claims 1 to 3, wherein the $1^{st}$ subsequence in the M subsequences satisfies the $1^{st}$ relationship in the M relationships, and the $1^{st}$ relationship is: the $k1^{th}$ element in the $1^{st}$ subsequence is greater than or

equal to the k2th element in the 1st subsequence; the 2nd subsequence in the M subsequences satisfies the 2nd relationship in the M relationships, and the 2nd relationship is: the kth element in the 2nd subsequence is greater than or equal to a smaller value in the k1th element in the 2nd subsequence and the k2th element in the 2nd subsequence; the 3rd subsequence in the M subsequences satisfies the 3rd relationship in the M relationships, and the 3rd relationship is: the k1th element in the 3rd subsequence is less than or equal to the k2th elements in the 3rd subsequence; and k, k1, and k2 are all integers greater than or equal to 1 and less than or equal to N, k2 is greater than k1, and k is greater than or equal to k1 and less than or equal to k2.

7. The method according to claim 4 or 5, wherein the method further comprises:
sending, by the first network device, first information to a second network device and/or a terminal device, wherein the first information indicates parameter information of the third sequence, and the parameter information comprises at least one of the following: the first value, the second value, the third value, $\mu$, v, s, and M.

8. The method according to any one of claims 1 to 7, wherein the first signal is used for sensing, the first signal is used for sensing and channel measurement, the first signal is used for sensing and channel estimation, or the first signal is used for sensing and data transmission.

9. The method according to any one of claims 1 to 8, wherein the method further comprises:
receiving, by the first network device, an echo signal of the first signal.

10. A communication method, wherein the method comprises:

receiving, by a second network device, an echo signal of a first signal, wherein the first signal is generated based on a first sequence, and the first sequence is a product of a second sequence and a third sequence, wherein the first sequence comprises N first elements, the second sequence comprises N second elements, the second sequence carries data, and the third sequence comprises N third elements greater than or equal to 0;
the ith element in the second sequence corresponds to the ith subcarrier in N subcarriers in a first frequency domain resource, the ith element in the third sequence corresponds to the ith subcarrier in the first frequency domain resource, the ith element in the first sequence is carried on the ith subcarrier in the first frequency domain resource, N is an integer greater than 1, and i is an integer greater than or equal to 1 and less than or equal to N; and
the first frequency domain resource comprises M non-overlapping frequency domain subresources, the third sequence comprises M subsequences, the tth subsequence in the M subsequences corresponds to the tth frequency domain subresource in the M frequency domain subresources, the tth subsequence in the M subsequences satisfies the tth relationship in M relationships, M is an integer greater than or equal to 2 and less than or equal to N, and t is an integer greater than or equal to 1 and less than or equal to M.

11. The method according to claim 10, wherein the ith element in the third sequence is equal to the (N-i+1)th element in the third sequence.

12. The method according to claim 10 or 11, wherein values of elements in at least one of the M subsequences are all the same.

13. The method according to any one of claims 10 to 12, wherein M is equal to 3, a start frequency of the t1th frequency domain subresource in the M frequency domain subresources is less than a start frequency of the t2th frequency domain subresource in the M frequency domain subresources, t1 is an integer greater than or equal to 1 and less than M, t2 is an integer greater than 1 and less than or equal to M, and t1 is less than t2;

the 1st subsequence in the M subsequences satisfies the 1st relationship in the M relationships, and the 1st relationship is: values of elements in the 1st subsequence are all first values;
the 2nd subsequence in the M subsequences satisfies the 2nd relationship in the M relationships, and the 2nd relationship is:

values of elements in the 2nd subsequence are all second values, a value of an element in the 2nd subsequence satisfies a polynomial function of a square of (k-(N-1)/2), or a value of an element in the

2nd subsequence satisfies a functional relationship $\sqrt{\dfrac{1}{\mu(k-\dfrac{N-1}{2})^2+v}+s}$ , wherein

$$\left|\frac{12v}{\mu(N-1)N(N+1)}\right| > 0.5$$ , k is a sequence number, in the third sequence, of an element in the 2nd

subsequence, $\mu$ is less than 0, v is greater than 0, and s is greater than 0;
the 3rd subsequence in the M subsequences satisfies the 3rd relationship in the M relationships, and the 3rd relationship is: values of elements in the 3rd subsequence are all third values; and
the first value and the third value are both greater than the second value.

14. The method according to any one of claims 10 to 13, wherein M is equal to 5, a start frequency of the t1th frequency domain subresource in the M frequency domain subresources is less than a start frequency of the t2th frequency domain subresource in the M frequency domain subresources, t1 is an integer greater than or equal to 1 and less than M, t2 is an integer greater than 1 and less than or equal to M, and t1 is less than t2;

   the 1st subsequence in the M subsequences satisfies the 1st relationship in the M relationships, and the 1st relationship is: values of elements in the 1st subsequence are all first values;
   the 2nd subsequence in the M subsequences satisfies the 2nd relationship in the M relationships, and the 2nd relationship is: values of elements in the 2nd subsequence are all 1s;
   the 3rd subsequence in the M subsequences satisfies the 3rd relationship in the M relationships, and the 3rd relationship is:

   values of elements in the 3rd subsequence are all second values, a value of an element in the 3rd subsequence satisfies a polynomial function of a square of (k-(N-1)/2), or a value of an element in the

   3rd subsequence satisfies a functional relationship $\sqrt{\dfrac{1}{\mu(k-\dfrac{N-1}{2})^2+v}+s}$ , wherein

   $$\left|\frac{12v}{\mu(N-1)N(N+1)}\right| > 0.5$$ , k is a sequence number, in the third sequence, of an element in the 3rd

   subsequence, $\mu$ is less than 0, v is greater than 0, and s is greater than 0;
   the 4th subsequence in the M subsequences satisfies the 4th relationship in the M relationships, and the 4th relationship is: values of elements in the 4th subsequence are all 1s;
   the 5th subsequence in the M subsequences satisfies the 5th relationship in the M relationships, and the 5th relationship is: values of elements in the 5th subsequence are all third values; and
   the first value and the third value are both greater than 1, and the second value is greater than 0 and less than or equal to 1.

15. The method according to any one of claims 10 to 13, wherein the 1st subsequence in the M subsequences satisfies the 1st relationship in the M relationships, and the 1st relationship is: the k1th element in the 1st subsequence is greater than or equal to the k2th element in the 1st subsequence; the 2nd subsequence in the M subsequences satisfies the 2nd relationship in the M relationships, and the 2nd relationship is: the kth element in the 2nd subsequence is greater than or equal to a smaller value in the k1th element in the 2nd subsequence and the k2th element in the 2nd subsequence; the 3rd subsequence in the M subsequences satisfies the 3rd relationship in the M relationships, and the 3rd relationship is: the k1th element in the 3rd subsequence is less than or equal to the k2th elements in the 3rd subsequence; and k, k1, and k2 are all integers greater than or equal to 1 and less than or equal to N, k2 is greater than k1, and k is greater than or equal to k1 and less than or equal to k2.

16. The method according to claim 13 or 14, wherein the method further comprises:
   receiving, by the second network device, first information sent by a first network device, wherein the first information indicates parameter information of the third sequence, and the parameter information comprises at least one of the following: the first value, the second value, the third value, $\mu$, v, s, and M.

17. The method according to any one of claims 10 to 16, wherein the first signal is used for sensing, the first signal is used for sensing and channel measurement, the first signal is used for sensing and channel estimation, or the first signal is used for sensing and data transmission.

18. A communication method, wherein the method comprises:

receiving, by a terminal device, a first signal, wherein the first signal is generated based on a first sequence, and the first sequence is a product of a second sequence and a third sequence, wherein

the first sequence comprises N first elements, the second sequence comprises N second elements, the second sequence carries data, and the third sequence comprises N third elements greater than or equal to 0;

the $i^{th}$ element in the second sequence corresponds to the $i^{th}$ subcarrier in N subcarriers in a first frequency domain resource, the $i^{th}$ element in the third sequence corresponds to the $i^{th}$ subcarrier in the first frequency domain resource, the $i^{th}$ element in the first sequence is carried on the $i^{th}$ subcarrier in the first frequency domain resource, N is an integer greater than 1, and i is an integer greater than or equal to 1 and less than or equal to N; and

the first frequency domain resource comprises M non-overlapping frequency domain subresources, the third sequence comprises M subsequences, the $t^{th}$ subsequence in the M subsequences corresponds to the $t^{th}$ frequency domain subresource in the M frequency domain subresources, the $t^{th}$ subsequence in the M subsequences satisfies the $t^{th}$ relationship in M relationships, M is an integer greater than or equal to 2 and less than or equal to N, and t is an integer greater than or equal to 1 and less than or equal to M.

19. The method according to claim 18, wherein the $i^{th}$ element in the third sequence is equal to the $(N-i+1)^{th}$ element in the third sequence.

20. The method according to claim 18 or 19, wherein values of elements in at least one of the M subsequences are all the same.

21. The method according to any one of claims 18 to 20, wherein M is equal to 3, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;
the $2^{nd}$ subsequence in the M subsequences satisfies the $2^{nd}$ relationship in the M relationships, and the $2^{nd}$ relationship is:

values of elements in the $2^{nd}$ subsequence are all second values, a value of an element in the $2^{nd}$ subsequence satisfies a polynomial function of a square of $(k-(N-1)/2)$, or a value of an element in the

$2^{nd}$ subsequence satisfies a functional relationship $\sqrt{\dfrac{1}{\mu(k-\dfrac{N-1}{2})^2+v}+s}$ , wherein

$\left|\dfrac{12v}{\mu(N-1)N(N+1)}\right|>0.5$ , k is a sequence number, in the third sequence, of an element in the $2^{nd}$ subsequence, $\mu$ is less than 0, v is greater than 0, and s is greater than 0;
the $3^{rd}$ subsequence in the M subsequences satisfies the $3^{rd}$ relationship in the M relationships, and the $3^{rd}$ relationship is: values of elements in the $3^{rd}$ subsequence are all third values; and
the first value and the third value are both greater than the second value.

22. The method according to any one of claims 18 to 20, wherein M is equal to 5, a start frequency of the $t1^{th}$ frequency domain subresource in the M frequency domain subresources is less than a start frequency of the $t2^{th}$ frequency domain subresource in the M frequency domain subresources, t1 is an integer greater than or equal to 1 and less than M, t2 is an integer greater than 1 and less than or equal to M, and t1 is less than t2;

the $1^{st}$ subsequence in the M subsequences satisfies the $1^{st}$ relationship in the M relationships, and the $1^{st}$ relationship is: values of elements in the $1^{st}$ subsequence are all first values;
the $2^{nd}$ subsequence in the M subsequences satisfies the $2^{nd}$ relationship in the M relationships, and the $2^{nd}$ relationship is: values of elements in the $2^{nd}$ subsequence are all 1s;
the $3^{rd}$ subsequence in the M subsequences satisfies the $3^{rd}$ relationship in the M relationships, and the $3^{rd}$ relationship is:

values of elements in the 3<sup>rd</sup> subsequence are all second values, a value of an element in the 3<sup>rd</sup> subsequence satisfies a polynomial function of a square of ($k$-($N$-1)/2), or a value of an element in the

3<sup>rd</sup> subsequence satisfies a functional relationship $\sqrt{\dfrac{1}{\mu(k-\dfrac{N-1}{2})^2+v}+s}$ , wherein

$\left|\dfrac{12v}{\mu(N-1)N(N+1)}\right|>0.5$ , k is a sequence number, in the third sequence, of an element in the 3<sup>rd</sup> subsequence, $\mu$ is less than 0, v is greater than 0, and s is greater than 0;

the 4<sup>th</sup> subsequence in the M subsequences satisfies the 4<sup>th</sup> relationship in the M relationships, and the 4<sup>th</sup> relationship is: values of elements in the 4<sup>th</sup> subsequence are all 1s;

the 5<sup>th</sup> subsequence in the M subsequences satisfies the 5<sup>th</sup> relationship in the M relationships, and the 5<sup>th</sup> relationship is: values of elements in the 5<sup>th</sup> subsequence are all third values; and

the first value and the third value are both greater than 1, and the second value is greater than 0 and less than or equal to 1.

23. The method according to any one of claims 18 to 20, wherein the 1<sup>st</sup> subsequence in the M subsequences satisfies the 1<sup>st</sup> relationship in the M relationships, and the 1<sup>st</sup> relationship is: the k1<sup>th</sup> element in the 1<sup>st</sup> subsequence is greater than or equal to the k2<sup>th</sup> element in the 1<sup>st</sup> subsequence; the 2<sup>nd</sup> subsequence in the M subsequences satisfies the 2<sup>nd</sup> relationship in the M relationships, and the 2<sup>nd</sup> relationship is: the k<sup>th</sup> element in the 2<sup>nd</sup> subsequence is greater than or equal to a smaller value in the k1<sup>th</sup> element in the 2<sup>nd</sup> subsequence and the k2<sup>th</sup> element in the 2<sup>nd</sup> subsequence; the 3<sup>rd</sup> subsequence in the M subsequences satisfies the 3<sup>rd</sup> relationship in the M relationships, and the 3<sup>rd</sup> relationship is: the k1<sup>th</sup> element in the 3<sup>rd</sup> subsequence is less than or equal to the k2<sup>th</sup> elements in the 3<sup>rd</sup> subsequence; and k, k1, and k2 are all integers greater than or equal to 1 and less than or equal to N, k2 is greater than k1, and k is greater than or equal to k1 and less than or equal to k2.

24. The method according to claim 21 or 22, wherein the method further comprises:
receiving, by the terminal device, first information sent by a first network device, wherein the first information indicates parameter information of the third sequence, and the parameter information comprises at least one of the following: the first value, the second value, the third value, $\mu$, v, s, and M.

25. A communication apparatus, wherein the communication apparatus comprises a processor and a memory, the memory stores a computer program, and when the computer program is run by the processor, the method according to any one of claims 1 to 9 is implemented.

26. A communication apparatus, wherein the communication apparatus comprises a processor and a memory, the memory stores a computer program, and when the computer program is run by the processor, the method according to any one of claims 10 to 17 is implemented.

27. A communication apparatus, wherein the communication apparatus comprises a processor and a memory, the memory stores a computer program, and when the computer program is run by the processor, the method according to any one of claims 18 to 24 is implemented.

28. A computer-readable storage medium, wherein the computer-readable storage medium comprises a computer program, and when the computer program is run by a processor, the method according to any one of claims 1 to 24 is implemented.

FIG. 1(a)

FIG. 1(b)

Network device A

Terminal device B

Integrated sensing and
communication signal

Echo signal

Target

FIG. 1(c)

First
network
device

Target (first
terminal
device)

Second network
device/Second
terminal device

S201: Generate a first signal
based on a first sequence

S202: First signal

S203: Echo signal

S203: Echo signal

FIG. 2

w[i]

0    1    2              ...              N−1    Number

FIG. 3

a[0] →  | Windowing | b[0] →  | IFFT | →  | Parallel-to-serial conversion | → OFDM baseband signal

a[1] →                b[1] →

⋮                      ⋮        ⋮                  ⋮

a[N−1] →              b[N−1] →

FIG. 4

FIG. 5

FIG. 6

w[i]

First
frequency
domain
separation
point A

Second
frequency
domain
separation
point B

0

N−1

Number

...

1st frequency
domain subresource

2nd frequency
domain subresource

3rd frequency
domain subresource

FIG. 7

w[i]

1

1

First
frequency
domain
separation
point A

Second
frequency
domain
separation
point B

Third
frequency
domain
separation
point C

Fourth
frequency
domain
separation
point D

0

N−1

Number

...

1st
frequency
domain
subresource

2nd
frequency
domain
subresource

3rd
frequency
domain
subresource

4th
frequency
domain
subresource

5th
frequency
domain
subresource

FIG. 8

FIG. 9

FIG. 10

FIG. 11

1201

Network device

Processor

Bus

1204

Memory

Transceiver

1203

1202

FIG. 12

1301

Terminal device

Processor

Bus

1304

Memory

Transceiver

1303

1302

FIG. 13

## INTERNATIONAL SEARCH REPORT

| International application No. |
|---|
| **PCT/CN2024/108251** |

### A. CLASSIFICATION OF SUBJECT MATTER

H04L5/00(2006.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, VEN, ENTXTC, CNKI, 3GPP: 感知, 回波, 序列, 元素, 子载波, 频域资源, 对应, 关系, sequence, element, sub-carrier +, subcarrier, relation+

### C. DOCUMENTS CONSIDERED TO BE RELEVANT

| Category* | Citation of document, with indication, where appropriate, of the relevant passages | Relevant to claim No. |
|---|---|---|
| A | CN 115118402 A (HUAWEI TECHNOLOGIES CO., LTD.) 27 September 2022 (2022-09-27) description, paragraphs [0003]-[0039] | 1-28 |
| A | CN 115580385 A (HUAWEI TECHNOLOGIES CO., LTD.) 06 January 2023 (2023-01-06) entire document | 1-28 |
| A | CN 116449319 A (HUAWEI TECHNOLOGIES CO., LTD.) 18 July 2023 (2023-07-18) entire document | 1-28 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 September 2024** | **23 October 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/108251**

| Patent document cited in search report | | | Publication date (day/month/year) | Patent family member(s) | Publication date (day/month/year) |
|---|---|---|---|---|---|
| CN | 115118402 | A | 27 September 2022 | None | |
| CN | 115580385 | A | 06 January 2023 | None | |
| CN | 116449319 | A | 18 July 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311016823